# EUROPÄISCHE PATENTSCHRIFT

(11) **EP 4 182 590 B1**
(45) Veröffentlichungstag und Bekanntmachung des Hinweises auf die Patenterteilung: **07.05.2025**
(21) Anmeldenummer: 21742673.3
(22) Anmeldetag: 15.07.2021
(51) Int. Cl.: F16L 25/00

(54) **DICHTEINSATZ FÜR EIN WELLROHRVERSCHRAUBUNGSSYSTEM, WELLROHRVERSCHRAUBUNGSSYSTEM, VERWENDUNG EINES DICHTEINSATZES, VERWENDUNG EINES WELLROHRVERSCHRAUBUNGSSYSTEMS SOWIE VERFAHREN ZUR MONTAGE EINES WELLROHRES**
SEALING INSERT FOR A CORRUGATED-PIPE SCREW FASTENING SYSTEM, CORRUGATED-PIPE SCREW FASTENING SYSTEM, USE OF A SEALING INSERT, USE OF A CORRUGATED-PIPE SCREW FASTENING SYSTEM, AND METHOD FOR FITTING A CORRUGATED PIPE
INSERT D'ÉTANCHÉITÉ POUR UN SYSTÈME DE RACCORD FILETÉ POUR TUYAU ANNELÉ, SYSTÈME DE RACCORD FILETÉ POUR TUYAU ANNELÉ, UTILISATION D'UN INSERT D'ÉTANCHÉITÉ, UTILISATION D'UN SYSTÈME DE RACCORD FILETÉ POUR TUYAU ANNELÉ ET PROCÉDÉ DE MONTAGE D'UN TUYAU ANNELÉ

(30) Priorität: 17.07.2020 DE 102020118953
(43) Veröffentlichungstag der Anmeldung: 24.05.2023
(73) Patentinhaber: Pflitsch GmbH & Co. KG., 42499 Hückeswagen Nordrhein Westfalen (DE)
(72) Erfinder: LENZING, Roland, 42499 Hückeswagen (DE); LECHNER, Martin, 51789 Lindlar (DE); LI PIRA, Rosario, 51688 Wipperfürth (DE)
(74) Vertreter: Geskes, Christoph
(86) Internationale Anmeldenummer: PCT/EP2021/069743
(87) Internationale Veröffentlichungsnummer: WO 2022/013347

(56) Entgegenhaltungen:
- GB-A- 2 178 125
- JP-A- S6 073 193
- US-A1- 2005 023 832
- US-A1- 2015 316 187
- US-B2- 7 055 868

## Beschreibung

Die Erfindung betrifft einen Dichteinsatz für ein Wellrohrverschraubungssystem, ein Wellrohrverschraubungssystem sowie eine Verwendung des Dichteinsatzes und des Wellrohrverschraubungssystem und ein Verfahren zur Montage eines Wellrohres.

Aus dem Stand der Technik sind Fittings für Wellrohre bekannt, beispielsweise ein Kabelschutzsystem umfassend Wellrohre und Fittings für die Wellrohre, die in einer Anschlussgeometrie anbringbar sind. Die aus dem Stand der Technik bekannten Fittings sind an sich nicht dicht, vielmehr müssen zusätzliche Dichtungen eingebracht werden, um eine Dichtigkeit gegen das Eindringen von Flüssigkeiten zu gewährleisten. Um besondere Dichtanforderung zu gewährleisten, ist weiterhin notwendig, ein Kabelverschraubungssystem dem Fitting nachgelagert vorzusehen, was dem Aufbau sehr groß macht.

US 2005/0023832 A1 offenbart ein Wellrohr-Fitting zum dichten Abschluss eines Wellrohres. Das Fitting umfasst einen rohrförmigen Fittingkörper, einen hülsenförmigen Halter und eine Überwurfmutter. Der Fittingkörper weist eine Manschette mit einem Aufnahmeloch für das Wellrohr und einem Außengewinde auf. Der Halter weist ein Durchgangsloch mit zwei umlaufenden Rippen zum Eingriff in die Wellen des Wellrohrs auf. Die Überwurfmutter weist ein Innengewinde auf, das in das Außengewinde eingreift. Der Halter weist ein kurzes Rohrstück und an einem Ende einen nach außen vorstehenden Flansch auf. Das Rohrstück hat eine über seine Länge gleichförmige, kreiszylindrische Außenkontur mit einem Außendurchmesser, und das Aufnahmeloch der Manschette hat eine kreiszylindrische Innenkontur mit einem Innendurchmesser, der gleich dem Außendurchmesser ist. Der Halter sitzt mit dem Rohrstück in dem Aufnahmeloch der Manschette. Der Flansch grenzt an eine erste Stirnfläche des Halters und erstreckt sich entlang einer Längsachse des Halters bis zu dem kurzen Rohrstück, und das kurze Rohrstück grenzt an eine zweite Stirnfläche des Halters und erstreckt sich entlang der Längsachse bis zu dem Flansch.

GB 2 178 125 A offenbart eine Kupplung für ein Wellrohr. Die Kupplung umfasst einen rohrförmigen Hauptkörper, eine Hülse und eine Überwurfmutter. Der Hauptkörper weist eine Manschette mit einem Aufnahmeloch für das Wellrohr und einem Außengewinde auf. Die Hülse weist ein Durchgangsloch mit mehreren umlaufenden Rippen zum Eingriff in die Wellen des Wellrohrs auf. Die Überwurfmutter weist ein Innengewinde auf, das in das Außengewinde eingreift. Die Hülse umfasst einen einzigen Außenwandungsabschnitt, der sowohl an eine erste als auch an eine zweite Stirnfläche der Hülse grenzt und sich entlang einer Längsachse der Hülse von der ersten bis zu der zweiten Stirnfläche erstreckt. Dieser einzige Außenwandungsabschnitt hat eine über seine gesamte Länge gleichförmige, hexagonale Außenkontur, und das Aufnahmeloch der Manschette hat eine hexagonale Innenkontur, die mit der hexagonalen Außenkontur korrespondiert, sodass die Hülse verschiebbar, aber nicht drehbar in dem Aufnahmeloch der Manschette sitzt.

US 2015/0316187 A1 offenbart eine Kupplung für ein Wellrohr. Die Kupplung umfasst einen rohrförmigen Stutzen, eine Hülse und eine Überwurfmutter. Der Stutzen weist eine Manschette mit einem Aufnahmeloch für das Wellrohr und einem Außengewinde auf. Die Hülse weist ein Durchgangsloch mit mehreren umlaufenden Rippen zum Eingriff in die Wellen des Wellrohrs auf. Die Überwurfmutter weist ein Innengewinde auf, das in das Außengewinde eingreift. Die Hülse weist ein kurzes Rohrstück und an einem Ende einen nach außen vorstehenden Flansch auf. Das Rohrstück hat eine über seine Länge gleichförmige, kreiszylindrische Außenkontur mit einem Außendurchmesser, und das Aufnahmeloch der Manschette hat eine kreiszylindrische Innenkontur mit einem Innendurchmesser, der gleich dem Außendurchmesser ist. Die Hülse sitzt mit dem Rohrstück in dem Aufnahmeloch der Manschette. Der Flansch grenzt an eine erste Stirnfläche der Hülse und erstreckt sich entlang einer Längsachse der Hülse bis zu dem kurzen Rohrstück, und das kurze Rohrstück grenzt an eine zweite Stirnfläche der Hülse und erstreckt sich entlang der Längsachse bis zu dem Flansch.

US 7,055,868 B2 offenbart eine Verschraubung für ein Wellrohr mit einer Halterung, die zwei Abschnitte mit unterschiedlichen Außendurchmessern umfasst.

Aufgabe der Erfindung ist es, die aus dem Stand der Technik bekannten Fittings zu verbessern. Insbesondere ist es Aufgabe der Erfindung, ein kompaktes Fitting zur Verfügung zu stellen beziehungsweise ein System, mit dem ein Wellrohr dicht an eine Anschlussgeometrie anbringbar ist.

Die Aufgabe wird erfindungsgemäß gelöst mittels eines Dichteinsatzes für ein Wellrohrverschraubungssystem, umfassend
- eine Ausnehmung zur Aufnahme eines Wellrohres,
- eine erste und eine zweite Endstirnfläche;
- einen ersten Außenwandungsabschnitt mit einem ersten Außendurchmesser und
- einen zweiten Außenwandungsabschnitt mit einem zweiten Außendurchmesser;
wobei
- eine die Ausnehmung begrenzende Innenwandung des Dichteinsatzes zumindest eine, bevorzugt eine Mehrzahl, insbesondere mindestens zwei, teilweise umlaufender Rippen umfasst;
- der erste Außenwandungsabschnitt an die erste Endstirnfläche grenzt und sich entlang einer Längsachse des Dichteinsatzes bis zu dem zweiten Außenwandungsabschnitt erstreckt;
- der zweite Außenwandungsabschnitt an die zweite Endstirnfläche grenzt und sich entlang der Längsachse bis zu dem ersten Außenwandungsabschnitt erstreckt;
- der erste Außendurchmesser größer ist als der zweite Außendurchmesser;
- der erste und der zweite Außenwandungsabschnitt jeweils zylindrisch ausgestaltet sind;
- auf einem Außenmantel des Dichteinsatzes eine Verdrehsicherung angeordnet ist; und
- die Verdrehsicherung dem zweiten Außenwandungsabschnitt zugeordnet ist,
- die Verdrehsicherung eine Mehrzahl von als Riefen und/oder Rippen ausgebildete, parallel zur Längsrichtung des Dichteinsatzes angeordnete Rastelemente aufweist.

Weiterhin wird die Aufgabe erfindungsgemäß gelöst mittels eines Wellrohrverschraubungssystems zumindest umfassend eine Druckschraube, einen Verschraubungskörper und einen erfindungsgemäßen Dichteinsatz.

Weiterhin wird die Aufgabe erfindungsgemäß gelöst mittels einer Verwendung eines erfindungsgemäßen Dichteinsatzes in einem erfindungsgemäßen Wellrohrverschraubungssystem zur Abdichtung eines Wellrohrs gegenüber einem Verschraubungskörper des Wellrohrverschraubungssystems und zur Verhinderung eines Verdrehens des Dichteinsatzes und/oder des Wellrohres in einem Verschraubungskörper.

Weiterhin wird die Aufgabe erfindungsgemäß gelöst mittels einer Verwendung eines erfindungsgemäßen Wellrohrverschraubungssystems zum Anschluss eines Wellrohres an eine Anschlussgeometrie.

Weiterhin wird die Aufgabe erfindungsgemäß gelöst mittels eines Verfahrens zur Montage eines Wellrohres mit einer Mehrzahl von Wellentälern an einer Anschlussgeometrie, mit den Schritten:
- Auffädeln einer Druckschraube auf das Wellrohr;
- Einbringen des Wellrohres in die Ausnehmung eines erfindungsgemäßen Dichteinsatzes derart, dass zumindest eine Rippe, bevorzugt eine Mehrzahl von Rippen, insbesondere mindestens zwei Rippen, im Eingriff mit einem Wellental, bei Vorsehung von zumindest zwei Rippen zwei Wellentälern, allgemein bei einer vorgegebenen Anzahl von Rippen, diese im Eingriff mit einer dieser Anzahl von Rippen entsprechenden Anzahl von Wellentälern des Wellrohres stehen;
- Einbringen eines Verschraubungskörpers in die Anschlussgeometrie;
- Einbringen des Dichteinsatzes mit dem Wellrohr in den Verschraubungskörper, wobei die Verdrehsicherung des Dichteinsatzes mit einer Verdrehsicherung des Verschraubungskörpers in Eingriff gebracht wird und der Dichteinsatz mit dem ersten Außenwandungsabschnitt aus dem Verschraubungskörper ragt; und
- Aufschrauben der Druckschraube auf den Verschraubungskörper derart, dass mittels der Druckschraube eine Materialverschiebung eines Materials des Dichteinsatzes erzeugt wird, wobei das Material sich zumindest teilweise dichtend an das Wellrohr anlegt.

Es wird ein Dichteinsatz für ein Wellrohrverschraubungssystem vorgeschlagen, der eine Ausnehmung, insbesondere eine vollständig durch den Dichteinsatz gehende Ausnehmung, ausgebildet in Richtung einer Längsachse des Dichteinsatzes, zur Aufnahme eines Wellrohrs umfasst, wobei auf einem Außenmantel des Dichteinsatzes eine Verdrehsicherung angeordnet ist. Eine die Ausnehmung begrenzende Innenwandung umfasst zumindest eine, bevorzugt eine Mehrzahl, insbesondere mindestens zwei, zumindest teilweise umlaufender Rippen.

Ein Wellrohr im Sinne der Erfindung ist ein Rohr aus einem Material, wie beispielsweise aus einem Kunststoff oder einem Metall, mit einem zumindest in einem Teilbereich beziehungsweise einer Teillänge des Rohres, bevorzugt über eine Gesamtlänge des Rohres, in einer Längsrichtung des Rohres wellenförmig wechselndem Durchmesser, insbesondere einem in Längsrichtung wellenförmig wechselnden Außendurchmesser, weiter bevorzugt auch einem in Längsrichtung wellenförmig wechselndem Innendurchmesser, noch weiter bevorzugt einem Außendurchmesser und einem Innendurchmesser, deren Wellen in ihren Wellentälern und Wellenbergen übereinstimmen. Aufgrund der Wellung durch die Ausbildung von Wellen zumindest auf einer Außenfläche des Rohres, bevorzugt auch auf einer Innenfläche des Rohres, ist das Wellrohr flexibel. Bevorzugt sind die Wellen in Längsrichtung ringartig ausgeformte Durchmesseränderungen. Die mindestens zwei Wellen bilden einen Wellenberg und zwischen zwei Wellenbergen ein Wellental aus. Die Wellen können kontinuierlich oder diskret ausgestaltet sein. Beispielsweise verlaufen kontinuierlich ausgestaltete Wellen in einem Längsschnitt des Wellrohres im Wesentlichen sinusförmig. In einer beispielhaften Ausgestaltung des Wellrohres mit einem diskreten Verlauf der Wellen weisen diese insbesondere zwischen zwei Wellenbergen auf der Außenoberfläche des Wellenrohres einen ebenen Abschnitt auf, der ein Wellental bildet. Im Querschnitt können die Wellenberge in etwa oder genau sinusförmig, rechteckig, trapezoid, halbkreisförmig oder teilweise oval ausgeführt sein. In Anschluss an das Wellrohr kann ein Verschraubungssystem mit einem Einsatz vorgesehen oder angeordnet sein, der im Wellrohr geführte Kabel oder Schläuche umgreift, so dass diesen eine Haltung im Verschraubungssystem vermittelt wird und vorteilhafterweise auch eine gewisse Dichtwirkung durch den Einsatz erzielbar ist.

Soweit vorliegend der Begriff "im Wesentlichen" verwendet wird, so gibt dieser einen Toleranzbereich an, der für den Fachmann unter wirtschaftlichen und technischen Gesichtspunkten zu vertreten ist, sodass das entsprechende Merkmal noch als solches zu erkennen oder verwirklicht ist.

In einer Ausgestaltung ist vorgesehen, dass der Dichteinsatz im Wesentlichen zylindrisch ausgestaltet ist. In einer weiteren Ausführungsform ist vorgesehen, dass der Dichteinsatz die erste Endstirnfläche und die zweite Endstirnfläche aufweist, die sich gegenüber liegen. Weiter bevorzugt umfasst der Dichteinsatz einen Außenmantel, der bevorzugt zumindest teilweise die Ausgestaltung eines Zylindermantels aufweist. Weiterhin bevorzugt umfasst der Dichteinsatz eine Ausnehmung, die vollständig durchgehend durch den Dichteinsatz ausgebildet ist.

Vollständig durchgehend heißt im Sinne der Erfindung, dass die Ausnehmung sich vollständig von einer ersten Endstirnfläche bis zu einer zweiten Endstirnfläche in einer hierdurch definierten Längsrichtung entlang einer Längsachse des Dichteinsatzes erstreckt. Hierdurch ist auch eine Länge des Dichteinsatzes und damit auch der Innenwandung desselben definiert. Bevorzugt ist die Ausnehmung zur Aufnahme eines Wellrohres ausgestaltet.

Die Ausnehmung umfasst in einer Ausgestaltung eine begrenzende Innenwandung. Die die Ausnehmung begrenzende Innenwandung kann zumindest teilweise zylindrisch und/oder zumindest teilweise konisch ausgestaltet sein.

In einer Ausgestaltung ist die vollständig durchgehende Ausnehmung von einer Innenwandung begrenzt ist. Die Innenwandung weist einen ersten Innenwandungsabschnitt auf. In einer Ausführungsform ist vorgesehen, dass der erste Innenwandungsabschnitt der ersten Endstirnfläche des Dichteinsatzes zugeordnet ist. In einer weiteren Ausführungsform ist vorgesehen, dass der erste Innenwandungsabschnitt der zweiten Endstirnfläche des Dichteinsatzes zugeordnet ist. Weiter bevorzugt umfasst der erste Innenwandungsabschnitt zumindest eine, bevorzugt eine Mehrzahl, teilweise umlaufender Rippen. Die Rippen sind insbesondere derart ausgestaltet, dass diese sich in eine Richtung nach radial innen erstrecken, bevorzugt in einen durch die Ausnehmung gebildeten Hohlraum. Die Rippen sind bevorzugt vollständig umlaufend ausgebildet. Im Sinne der vorliegenden Erfindung ist unter dem Begriff "umlaufend" zu verstehen, dass sich eine Längserstreckung einer Rippe entlang eines Umfangs der Innenwandung erstreckt. Eine Längserstreckung einer Rippe verläuft senkrecht zu der Längsachse des Dichteinsatzes. Eine vollständig umlaufende Rippe bildet einen geschlossenen Ring. Die Rippen können auch teilweise umlaufend ausgestaltet sein. Bevorzugt erstreckt sich eine teilweise umlaufend ausgestaltete Rippe nicht über den vollständigen Umfang der Innenwandung und bildet ein oder mehrere Rippensegmente aus, die auch als Ringsegmente angesprochen werden können. In einer weiteren Ausgestaltung ist vorgesehen, dass auf einer Höhe der Innenwandung eine Mehrzahl von Rippensegmenten angeordnet sind, die bevorzugt in Umfangsrichtung voneinander beabstandet sind. Eine Mehrzahl von Rippensegmenten, die in Umfangsrichtung auf einer Höhe auf der Innenwandung angeordnet sind, sind im Sinne der Erfindung als eine teilweise umlaufende Rippe zu verstehen.

In einer weiteren Ausführungsform ist vorgesehen, dass die Rippe in einem Querschnitt in etwa oder genau trapezoid, rechteckig, dreieckig, bogensegmentförmig und/oder zumindest teilweise oval ausgeführt ist. Bevorzugt weisen die Rippen jeweils zwei Flanken auf, die insbesondere bei einer dreieckigen, trapezförmigen und/oder bogensegmentförmigen Ausbildung der Rippen in einem Winkel von etwa 60° bis etwa 90°, bevorzugt etwa 65° bis etwa 75°, weiter bevorzugt etwa 70° zueinander stehen. In einer bevorzugten Ausführungsform, die als rechteckförmig angesprochen werden kann, sind die zwei Flanken über einen Mittelabschnitt miteinander verbunden. Die zwei Flanken sind dann im Wesentlichen parallel zueinander ausgebildet. Der Mittelabschnitt kann linear oder bogenförmig ausgebildet sein.

Bevorzugt weist der erste Innenwandungsabschnitt eine Mehrzahl von teilweise innen umlaufenden Rippen, bevorzugt etwa zwei bis etwa zehn, weiter bevorzugt etwa drei bis etwa vier, bevorzugt von vollständig umlaufenden Rippen, auf.

Wird im Rahmen der Erfindung der Begriff "etwa" im Zusammenhang mit Werten oder Wertbereichen verwendet, so ist darunter ein Toleranzwert zu verstehen, den der Fachmann auf diesem Gebiet für üblich erachtet, insbesondere ist ein Toleranzbereich von ±20 %, bevorzugt ±10 %, weiter bevorzugt ±5 % vorgesehen. Soweit verschiedene Wertbereiche, beispielsweise bevorzugte und weiter bevorzugte Wertbereiche, in der vorliegenden Erfindung angegeben sind, so sind die Untergrenzen und die Obergrenzen der verschiedenen Wertbereiche miteinander kombinierbar.

In einer weiteren Ausgestaltung ist vorgesehen, dass die Rippen einen Abstand in Längsrichtung des Dichteinsatzes, bevorzugt einen etwa gleichmäßigen Abstand, voneinander haben. Insbesondere ist ein Abstand der Rippen derart bemessen, dass ein Eingriff von Wellenbergen eines Wellenrohres zwischen die Rippen ermöglicht ist. Insbesondere ist bei Vorsehung nur einer Rippe diese in einem Wellental des Wellrohres anordenbar. In dieser Ausführungsform weist die Rippe bevorzugt eine Ausbildung in ihrer Form auf, die einem Wellental des Wellrohres angepasst ist, insbesondere in ihrer Außenkontur der Kontur des Wellentales im Wesentlichen entspricht. Bevorzugt ist der Abstand der Rippen, die radiale Erstreckung der Rippen in den durch die Ausnehmung gebildeten Hohlraum, der Querschnitt der Rippen und/oder ein Winkel der Flanken der Rippen angepasst an die Wellung eines Wellrohres, zumindest an einen Teilbereich beziehungsweise eine Teillänge desselben, das mit dem Dichteinsatz zusammenwirken kann beziehungsweise soll. Bevorzugt entspricht die Außenkontur der Rippen im Wesentlichen einer Kontur der Wellentäler des Wellrohres. Insbesondere ist der Dichteinsatz derart ausgeführt, dass bei einer Ausbildung mit mindestens zwei Rippen mittels dieser ein Eingriff in Wellentäler des Wellrohres ermöglicht ist. In einer weiteren bevorzugten Ausführungsform ist vorgesehen, dass die Rippen einen gleichen Abstand von Mitte zu Mitte aufweisen, wie die Wellentäler von Mitte zu Mitte des Wellrohres, dass mit dem Dichteinsatz verwendbar ist. Bevorzugt ist die Erstreckung der Rippen in Längsrichtung des Dichteinsatzes kleiner oder gleich einer Erstreckung der Wellentäler in Längsrichtung des Wellrohres.

In einer weiteren Ausführungsform ist vorgesehen, dass der Abstand zweier in Längsrichtung des Dichteinsatzes benachbarter Rippen von Mitte zu Mitte der Rippen etwa 1 mm bis etwa 1 cm beträgt.

In einer weiteren Ausgestaltung ist vorgesehen, dass die zumindest teilweise umlaufenden Rippen über die Länge des ersten Innenwandungsabschnitts, und in einer alternativen Ausgestaltung bevorzugt über die gesamte Länge der die Ausnehmung begrenzenden Innenwandung verteilt ist. In dieser alternativen Ausführungsform ist die Ausbildung der Innenwandung damit identisch zu derjenigen des ersten Innenwandungsabschnitts.

In einer weiteren Ausführungsform ist vorgesehen, dass zumindest eine Rippe bündig mit der ersten Endstirnfläche oder der zweiten Endstirnfläche abschließt. Insbesondere kann vorgesehen sein, dass die Rippe einen Teil der ersten Endstirnfläche und/oder der zweiten Endstirnfläche bildet.

In einer weiteren Ausgestaltung ist vorgesehen, dass die die Ausnehmung begrenzende Innenwandung einen zweiten Innenwandungsabschnitt umfasst. Bevorzugt ist vorgesehen, dass der zweite Innenwandungsabschnitt keine Rippen aufweist. Der zweite Innenwandungsabschnitt ist nicht verwirklicht, wenn, wie oben beschrieben, in einer alternativen Ausführungsform die Innenwandung über deren gesamte Länge Rippen aufweist. In einer Ausgestaltung ist vorgesehen, dass die Innenwandung des Dichteinsatzes den ersten Innenwandungsabschnitt und den zweiten Innenwandungsabschnitt umfasst, wobei der erste Innenwandungsabschnitt die Rippen umfasst und wobei der zweite Innenwandungsabschnitt keine Rippen umfasst. In einer Ausführungsform ist vorgesehen, dass der zweite Innenwandungsabschnitt im Wesentlichen eine glatte Oberfläche aufweist.

Die Längen der Innenwandungsabschnitte in Richtung der Längsachse können nach Bedarf unabhängig voneinander beliebig gewählt werden. So kann beispielsweise der erste Innenwandungsabschnitt kürzer oder länger als der zweite Innenwandungsabschnitt oder so lang wie der zweite Innenwandungsabschnitt sein.

In einer weiteren Ausgestaltung ist vorgesehen, dass die erste Endstirnfläche und die zweite Endstirnfläche sich gegenüber liegen, wobei der Dichteinsatz zumindest eine von der ersten Endstirnfläche zur zweiten Endstirnfläche durchgehende Schlitzung umfasst. Die Schlitzung erlaubt es, die Dichtung komfortabel um das Wellrohr zu legen, sodass es insbesondere nicht notwendig ist, das Wellrohr gegen den Widerstand der Dichtung und insbesondere der Rippen durch den Dichteinsatz zu schieben.

In einer weiteren Ausgestaltung ist vorgesehen, dass der Dichteinsatz zwei Schlitzungen aufweist. Dies führt zu einer zweiteiligen Ausführungsform des Dichteinsatzes, die es erlaubt, dass Wellrohr schnell und komfortabel mit dem Dichteinsatz zu versehen. Insbesondere ist eine zweiteilige Ausgestaltung des Dichteinsatzes dann vorgesehen, wenn das Material des Dichteinsatzes so rigide ist, dass es entweder unkomfortabel für den Benutzer wäre, den Dichteinsatz aufzubiegen, oder dass das Material bei einem Aufbiegen, um den Dichteinsatz auf dem Wellrohr zu montieren, plastisch verformt werden könnte und/oder brechen könnte.

In einer weiteren Ausführungsform ist vorgesehen, dass der Dichteinsatz keine Schlitzung aufweist.

Es ist vorgesehen, dass der erste Außenwandungsabschnitt der ersten Endstirnfläche des Dichteinsatzes zugeordnet ist. Der erste Außenwandungsabschnitt ist ein äußerer Mantelflächenabschnitt des Dichteinsatzes mit dem ersten Außendurchmesser. Der erste Außenwandungsabschnitt grenzt an die erste Endstirnfläche.

Der zweite Außenwandungsabschnitt ist ein äußerer Mantelflächenabschnitt des Dichteinsatzes mit dem zweiten Außendurchmesser. Der zweite Außenwandungsabschnitt grenzt an die zweite Endstirnfläche.

Die Längen der Außenwandungsabschnitte in Richtung der Längsachse können nach Bedarf unabhängig voneinander beliebig gewählt werden. So kann beispielsweise der erste Außenwandungsabschnitt kürzer oder länger als der zweite Außenwandungsabschnitt oder so lang wie der zweite Außenwandungsabschnitt sein.

Die Längen der Außenwandungsabschnitte und der Innenwandungsabschnitte in Richtung der Längsachse können nach Bedarf unabhängig voneinander beliebig gewählt werden. So kann beispielsweise der erste Außenwandungsabschnitt kürzer oder länger als der erste Innenwandungsabschnitt oder so lang wie der erste Innenwandungsabschnitt sein und/oder kürzer oder länger als der zweite Innenwandungsabschnitt oder so lang wie der zweite Innenwandungsabschnitt sein, und/oder kann beispielsweise der zweite Außenwandungsabschnitt kürzer oder länger als der erste Innenwandungsabschnitt oder so lang wie der erste Innenwandungsabschnitt sein und/oder kürzer oder länger als der zweite Innenwandungsabschnitt oder so lang wie der zweite Innenwandungsabschnitt sein.

In einer Ausgestaltung ist vorgesehen, dass eine Materialdicke des Dichteinsatzes zur ersten Endstirnfläche und/oder zur zweiten Endstirnfläche hin geringer wird. Insbesondere verläuft die Änderung der Materialdicke kontinuierlich. In einer weiteren, bevorzugten Ausgestaltung ist vorgesehen, dass die Änderung der Materialdicke des Dichteinsatzes diskret, das heißt in Schritten beziehungsweise Stufen erfolgt.

In einer weiteren Ausgestaltung ist vorgesehen, dass die Reduzierung der Materialdicke des Dichteinsatzes durch einen sich vergrößernden Innendurchmesser der Ausnehmung des Dichteinsatzes zur ersten Endstirnfläche hin verwirklicht ist, wobei der Außendurchmesser des Dichteinsatzes durch Vorsehen einer Stufe sich diskret vergrößert. Besonders ist bevorzugt vorgesehen, dass der zweite Innenwandungsabschnitt der Innenwandung der Ausnehmung konisch ausgestaltet ist, während erfindungsgemäß der erste und auch der zweite Außenwandungsabschnitt im Wesentlichen zylindrisch bleibt. Weiter bevorzugt ist vorgesehen, dass eine Konizität des zweiten Innenwandungsabschnittes sich zum ersten Innenwandungsabschnitt hin verjüngt.

In einer weiteren Ausführungsform ist vorgesehen, dass die Materialdicke des Dichteinsatzes nur im Bereich des zweiten Innenwandungsabschnitts zu der ersten oder der zweiten Endstirnfläche, je nach Ausführungsform, hin geringer wird, also abnimmt.

Beispielsweise ist der erste Außenwandungsabschnitt und ein zweiter Innenwandungsabschnitt jeweils angrenzend an die erste Endstirnfläche angeordnet. Erfindungsgemäß ist der Außendurchmesser des zweiten Außenwandungsabschnitts kleiner als derjenige des ersten Außenwandungsabschnitts. Der erste Innenwandungsabschnitt und der zweite Außenwandungsabschnitt sind an die zweite Endstirnfläche angrenzend angeordnet. Der erste Außenwandungsabschnitt und der zweite Außenwandungsabschnitt sind erfindungsgemäß jeweils zylindrisch ausgestaltet. Der erste Innenwandungsabschnitt ist im Wesentlichen zylindrisch ausgestaltet und weist nach innen ragende Rippten auf. Der zweite Innenwandungsabschnitt ist in dieser Ausführungsform konisch ausgestaltet und weist einen sich zur ersten Endstirnfläche hin vergrößernden Innendurchmesser auf.

In einer weiteren Ausführungsform ist vorgesehen, dass die Materialdicke des Dichteinsatzes im Bereich des zweiten Innenwandungsabschnittes über dessen Länge in Längsrichtung des Dichteinsatzes in Wesentlichen gleichbleibend ist. Im Übrigen kann bevorzugt dieser Dichteinsatz wie in der vorstehend beschriebenen Ausführungsform ausgebildet sein. Insbesondere ist in einer weiteren Ausgestaltung vorgesehen, dass die Materialdicke des Dichteinsatzes in zumindest einem Teilabschnitt des zweiten Innenwandungsabschnitts zu der ersten Endstirnfläche des Dichteinsatzes geringer wird, also abnimmt.

In einer weiteren Ausgestaltung ist zwischen dem ersten Außenwandungsabschnitt und dem zweiten Außenwandungsabschnitt ein außen umlaufender Absatz, der auch als Stufe angesprochen werden kann, ausgebildet. Bevorzugt ist ein diskreter Übergang in Form einer Stufe oder eines Absatzes vom ersten Außendurchmesser zum zweiten Außendurchmesser vorgesehen. In einer weiteren Ausgestaltung ist ein kontinuierlicher Übergang des ersten Außenwandungsabschnitts mit dem ersten Außendurchmesser zum zweiten Außenwandungsabschnitt mit dem zweiten Außendurchmesser vorgesehen, wobei in einer Ausführungsform zumindest ein Teilabschnitt der Außenwandung zur zweiten Endstirnfläche des Dichteinsatzes hin konisch ausgebildet ist. In einer weiteren Ausführungsform ist vorgesehen, dass die Materialdicke des Dichteinsatzes zur zweiten Endstirnfläche hin gleichbleibend ausgestaltet ist.

Erfindungsgemäß umfasst der Dichteinsatz eine Verdrehsicherung. Erfindungsgemäß ist vorgesehen, dass auf einem Außenmantel des Dichteinsatzes eine Verdrehsicherung angeordnet ist.

Erfindungsgemäß ist vorgesehen, dass die Verdrehsicherung eine Mehrzahl parallel zur Längsrichtung des Dichteinsatzes angeordnete Rastelemente umfasst. Die Rastelemente sind als Riefen und/oder als Rippen ausgestaltet.

Die Riefen können als insbesondere längslaufende Einkerbungen oder Ausnehmungen sein. Die Rippen sind insbesondere längslaufende nach radial außen ragende Vorsprünge. Erfindungsgemäß ist die Verdrehsicherung dem zweiten Außenwandungsabschnitt zugeordnet. Bevorzugt ist die Verdrehsicherung angrenzend an den ersten Außenwandungsabschnitt am zweiten Außenwandungsabschnitt angeordnet. In einer weiteren Ausgestaltung ist vorgesehen, dass die parallel zu einer Längsachse angeordneten Rastelemente sich von dem ersten Außenwandungsabschnitt bis angrenzend an die zweite Endstirnfläche über den zweiten Außenwandungsabschnitt und damit über die gesamte Länge des zweiten Außenwandungsabschnitts erstrecken.

In einer weiteren Ausgestaltung ist vorgesehen, dass die Verdrehsicherung beabstandet von der zweiten Endstirnfläche auf dem zweiten Außenwandungsabschnitt angeordnet ist. Insbesondere ist zwischen Verdrehsicherung und der zweiten Endstirnfläche der zweite Außenwandungsabschnitts mit einer glatten beziehungsweise ebenen Oberfläche ausgebildet.

In einer weiteren Ausgestaltung ist vorgesehen, dass die Verdrehsicherung beabstandet von dem ersten Außenwandungsabschnitt auf dem zweiten Außenwandungsabschnitt angeordnet ist. Insbesondere ist zwischen Verdrehsicherung und dem ersten Außenwandungsabschnitt die Oberfläche des zweiten Außenwandungsabschnitts glatt beziehungsweise eben ausgebildet. Die Verdrehsicherung kann sich in dieser Ausgestaltung bis angrenzend an die zweite Endstirnfläche des Dichteinsatzes erstrecken.

In einer weiteren bevorzugten Ausgestaltung ist vorgesehen, dass die Verdrehsicherung bevorzugt vollständig umlaufend auf dem Außenmantel angeordnet ist. Insbesondere sind die Rastelemente gleichmäßig auf dem Umfang des zweiten Außenwandungsabschnittes verteilt. Die Rastelemente der Verdrehsicherung können in ihrer Form im Querschnitt ausgebildet sein wie die Rippen auf der Innenwandung des Dichteinsatzes, wie weiter oben beschrieben.

In einer Ausgestaltung ist vorgesehen, dass der Dichteinsatz ein Material, das bevorzugt elastisch verformbar ist, umfasst, ausgewählt aus einer Gruppe umfassend Silikon, thermoplastische Elastomere und/oder Kautschuk.

In einer beispielhaften Ausgestaltung umfasst der Dichteinsatz eine erste Endstirnfläche und einer zweite Endstirnfläche. Der beispielhafte Dichteinsatz ist in Wesentlichen zylindrisch geformt und weist eine vollständig durchgehende Ausnehmung auf. Ein Außenmantel des Dichteinsatzes umfasst den ersten und den zweiten Außenwandungsabschnitt, wobei der erste Außenwandungsabschnitt an die erste Endstirnfläche grenzt und der zweite Außenwandungsabschnitt an die zweite Endstirnfläche grenzt. Der zweite Außenwandungsabschnitt umfasst beispielsweise eine Verdrehsicherung, die ausgestaltet ist als eine Vielzahl von auf dem Umfang des zweiten Außenwandungsabschnittes verteilter achsparalleler Rastelemente. Die Verdrehsicherung grenzt beispielhaft an den ersten Außenwandungsabschnitt und ragt bis etwa zur Mitte des zweiten Außenwandungsabschnitts. Die Rastelemente weisen beispielhaft jeweils zwei Flanken auf, die in einem Flankenwinkel von etwa 70° zueinander stehen oder etwa parallel zueinander ausgebildet sind, wobei diese Flanken dann durch ein Mittelteil verbunden sind, wie es weiter oben in Zusammenhang mit der Ausbildung der Rippen auf der Innenwandung im Querschnitt gesehen beschrieben ist.

Der beispielhafte Dichteinsatz umfasst eine Schlitzung, die sich vollständig durchgehend von der ersten Endstirnfläche zur zweiten Endstirnfläche erstreckt. Mittels der Schlitzung kann der Dichteinsatz aufgebogen und auf ein hier nicht dargestelltes Wellrohr aufgebraucht werden. In einer weitern beispielhaften Ausgestaltung ist der Dichteinsatz zweigeteilt ausgeführt, wobei dieser zwei sich vollständig durchgehend von der ersten Endstirnfläche zur zweiten Endstirnfläche erstreckende Schlitzungen aufweist.

Die vollständig durchgehende Ausnehmung umfasst einen ersten Innenwandungsabschnitt und einen zweiten Innenwandungsabschnitt. Der zweite Innenwandungsabschnitt weist eine glatte Oberfläche auf. Er weist zudem eine konische Ausgestaltung auf. Insbesondere verjüngt sich die Innenwandung im zweiten Innenwandungsabschnitt zum ersten Innenwandungsabschnitt hin beziehungsweise weitet sich die Innenwandung zur ersten Endstirnfläche des Dichteinsatzes hin auf. Der Innendurchmesser des zweiten Innenwandungsabschnitts vergrößert sich in Richtung auf die erste Endstirnfläche des Dichteinsatzes. Der zweite Innenwandungsabschnitt weist eine zweite Materialdicke auf, die sich zumindest abschnittsweise zur ersten Endstirnfläche hin verjüngt beziehungsweise geringer wird, wodurch die Ausnehmung im zweiten Innenwandungsabschnitt konisch ausgeführt ist.

Der erste Innenwandungsabschnitt umfasst auf der Innenwandung der Ausnehmung beispielhaft vier innen umlaufende Rippen. Der erste Innenwandungsabschnitt grenzt an die zweite Endstirnfläche. In einer alternativen beispielhaften Ausgestaltung sind die Rippen im Wesentlichen gleichmäßig über eine vollständige Höhe der Innenwandung verteilt sind. Der Dichteinsatz weist in dieser Ausgestaltung ausschließlich einen ersten Innenwandungsabschnitt auf. Zumindest eine Rippe kann bündig mit der Endstirnfläche, beispielsweise der ersten Endstirnfläche und/oder der zweiten Endstirnfläche, abschließen.

Auf dem Außenmantel umfasst der beispielhafte Dichteinsatz den ersten und den zweiten Außenwandungsabschnitt. Der erste Außenwandungsabschnitt weist einen ersten Außendurchmesser auf, der größer ist als der zweite Außendurchmesser des zweiten Außenwandungsabschnitts. Hierdurch wird ein Absatz gebildet, der ein zu weites Durchschieben des Dichteinsatzes in einen Verschraubungskörper, der beispielsweise ein Doppelnippel oder aber auch ein sonstiges, insbesondere steckerartiges, Bauteil mit mindestens auf einer Seite angeordnetem Gewinde zur Anordnung einer Druckschraube, verhindert.

In einer zweiten beispielhaften Ausführungsform ist vorgesehen, dass der Dichteinsatz einen ersten Innenwandungsabschnitt der Ausnehmung und einen zweiten Innenwandungsabschnitt der Ausnehmung umfasst. Der erste Innenwandungsabschnitt, der die innen umlaufenden Rippen aufweist, grenzt in der zweiten beispielhaften Ausgestaltung an die erste Endstirnfläche, wobei insbesondere die innenumlaufende Rippe bündig mit der ersten Endstirnfläche abschließt. Der erste Innenwandungsabschnitt der Ausnehmung ist somit in etwa im Bereich des ersten Außenwandungsabschnitts angeordnet. Weiterhin ist der zweite Innenwandungsabschnitt der Ausnehmung etwa im Bereich des zweiten Außenwandungsabschnitts angeordnet.

Weiterhin wird ein Wellrohrverschraubungssystem vorgeschlagen, dass zumindest eine Druckschraube, einen Verschraubungskörper und einen Dichteinsatz, wie oben beschrieben ist, umfasst.

Der Verschraubungskörper ist insbesondere als Doppelnippel ausgestaltet, kann aber auch anders ausgestaltet sein, beispielsweise als Steckergehäuse oder Bauteil mit mindestens auf einer Seite angeordnetem Gewinde zur Anordnung der Druckschraube. Bevorzugt weist der Verschraubungskörper ein erstes Außengewinde, und weiter bevorzugt ein zweites Außengewinde auf. Weiter bevorzugt weist der Verschraubungskörper zwischen dem ersten Außengewinde und dem zweiten Außengewinde eine Schlüsselanlagestruktur mit mindestens einer Schlüsselanlagefläche auf. Die Schlüsselanlagestruktur umfasst in einer Ausgestaltung eine Anschlagsfläche für die Druckschraube. So der Verschraubungskörper nicht als Doppelnippel ausgebildet ist und insbesondere keine Schlüsselanlagestruktur aufweist, kann dieser gleichwohl eine Anschlagsfläche aufweisen, die zum Beispiel von einem dem Gewinde gegenüberliegend angeordneten Bauteil oder Steckergehäuse des Verschraubungskörpers zur Verfügung gestellt ist. Wird die Druckschraube auf den Verschraubungskörper geschraubt, kann diese insbesondere so weit aufgeschraubt werden, dass diese bis zur Anschlagsfläche heruntergeschraubt wird und somit mit dem Verschraubungskörper verblockt. Insbesondere kann die Druckschraube mittels der Anschlagfläche auf Block auf den Verschraubungskörper geschraubt werden. Dies hat den Vorteil, dass die Druckschraube sich nicht einfach von selbst, beispielsweise durch Temperaturschwankungen oder Vibrationen, von dem Verschraubungskörper lösen kann. Die Druckschraube ist insbesondere als Überwurfmutter mit einer zentralen Durchgangsausnehmung ausgestaltet. Insbesondere weist die Druckschraube auf der Innenwandung der Ausnehmung eine Druckkontur auf, mittels der beim Aufschrauben der Druckschraube auf den Verschraubungskörper der zumindest teilweise in den in den Verschraubungskörper eingebrachten Dichteinsatz verformt werden kann.

In einer Ausgestaltung ist vorgesehen, dass der Verschraubungskörper eine Verdrehsicherung umfasst, die mit der Verdrehsicherung des Dichteinsatzes korrespondiert. Insbesondere ist vorgesehen, dass der Dichteinsatz eine Rippe, bevorzugt eine Mehrzahl von Rippen, auf dem zweiten Außenwandungsabschnitt aufweist und der Verschraubungskörper eine Riefe, bevorzugt eine Mehrzahl von Riefen, umfasst, in die die Rippen des Dichteinsatzes eingreifen können. In einer weiteren Ausgestaltung ist vorgesehen, dass der Verschraubungskörper eine Rippe, bevorzugt eine Mehrzahl von Rippen, auf der Innenoberfläche der durchgehenden Ausnehmung aufweist, die in Riefen der Verdrehsicherung des Dichteinsatzes eingreifen. In einer weiteren Ausgestaltung ist vorgesehen, dass sowohl der Dichteinsatz auf dem zweiten Außenwandungsabschnitt als auch der Verschraubungskörper auf der Innenoberfläche eine Rippe, bevorzugt eine Mehrzahl von Rippen, aufweist, die bevorzugt jeweils zueinander versetzt ineinandergreifen.

Eine erste beispielhafte Ausgestaltung eines Wellrohrverschraubungssystems umfasst eine Druckschraube und einen Verschraubungskörper, auf dem die Druckschraube schraubbar ist. In den Verschraubungskörper ist der Dichteinsatz gesetzt, insbesondere im Bereich des mindestens einen Außengewindes des Verschraubungskörpers. Ein O-Ring, der beispielswiese in einer Ringnut in einer Schlüsselanlagestruktur oder in einem Bereich einer Anlagefläche auf dem Verschraubungskörper angeordnet ist, kann diesen gegen eine Anschlussgeometrie, die nicht Teil des vorgeschlagenen Wellrohrverschraubungssystems und nur beispielsweise als Sicherungskasten, Maschinenteil etc. ausgebildet ist, abdichten. Der Verschraubungskörper weist innen liegend eine Verdrehsicherung auf, die mit der Verdrehsicherung des Dichteinsatzes korrespondiert. Die einzelnen parallelen Rastelemente der Verdrehsicherung des Dichteinsatzes greifen in die Bereiche zwischen den parallelen Rastelementen der Verdrehsicherung des Verschraubungskörpers ein.

Ein Innendurchmesser des Verschraubungskörpers in einem Bereich, in dem der Dichteinsatz eingesetzt ist, ist in einer Ausgestaltung kleiner als der erste Außendurchmesser des Dichteinsatzes. Bevorzugt ist der erste Außendurchmesser größer als ein Kerndurchmesser des Verschraubungskörpers. Der Kerndurchmesser ist der kleinste Innendurchmesser des Verschraubungskörpers im Einsetzbereich des Dichteinsatzes im Bereich des mindestens einen Außengewindes des Verschraubungskörpers, der insbesondere durch die parallelen Rastelemente bedingt ist. Weiter bevorzugt ist der erste Außendurchmesser des Dichteinsatzes kleiner als oder etwa gleich einem Außendurchmesser des mindestens einen Außengewindes des Verschraubungskörpers. Der Dichteinsatz ist somit nur teilweise in den Verschraubungskörper eingeführt, so dass der erste Außenwandungsabschnitt auf dem Verschraubungskörper aufsitzt, insbesondere unterstützt durch einen Absatz des Dichteinsatzes. Weiter bevorzugt ragt der Dichteinsatz bevorzugt mit dem ersten Außenwandungsabschnitt aus dem Verschraubungskörper. Weiter bevorzugt ragt der Dichteinsatz mit dem ersten Außenwandungsabschnitt und/oder dem zweiten Außenwandungsabschnitt, insbesondere wenn der zweite Außenwandungsabschnitt einen kleineren Außendurchmesser aufweist als der erste Außenwandungsabschnitt des Dichteinsatzes, in den Verschraubungskörper. Wenn die Druckschraube auf den Verschraubungskörper aufgeschraubt wird, drückt diese auf den Dichteinsatz.

Die Druckschraube weist eine innenliegende, umlaufende Druckkontur auf, die auf den ersten Außenwandungsabschnitt des Dichteinsatzes drückt, wenn die Druckschraube auf den Verschraubungskörper aufgeschraubt wird. Vorteilhafterweise kann die Druckschraube unabhängig von einem in das Wellrohrverschraubungssystem eingebrachten Wellrohr, insbesondere innerhalb bestimmter Maßtoleranzen eines Durchmessers des Wellrohres, mit einer umlaufenden Stirnfläche der Druckschraube bis auf eine Anschlagsfläche des Verschraubungskörpers aufgeschraubt werden, die z.B. durch eine Schlüsselanlagestruktur oder ein Bauteil des Verschraubungskörpers zur Verfügung gestellt ist. Eine solche Verschraubung wird im Sinne der vorliegenden Erfindung als eine Verschraubung auf Block bezeichnet und hat den Vorteil, dass sich ein versehentliches Lösen beispielsweise durch Temperaturschwankungen oder Vibrationen vermindert wird, da hierbei die Gewindegeometrien der Druckschraube und des Verschraubungskörpers sich miteinander verspannen. Bei einer konischen Ausgestaltung des zweiten Innenwandungsabschnitts der Ausnehmung des Dichtkörpers kann das Material des Dichtkörpers bis an das Wellrohr heran nach insbesondere radial innen verschoben werden, ohne dass das Wellrohr dadurch einen Schaden nimmt. Dies ist insbesondere dann eine vorteilhafte Ausführungsform, wenn das Material des Dichteinsatzes sehr fest beziehungsweise rigide ist oder der Dichteinsatz ein großes Volumen aufweist, da bei einer konischen Ausbildung des zweiten Innenwandungsabschnitts die aufzuwendenden Kräfte für eine Verschraubung bis auf Block reduziert sind.

In einer zweiten beispielhaften Ausgestaltung des Wellrohrverschraubungssystems umfasst dieses einen Dichteinsatz, der zweiteilig ausgestaltet ist. Für die zweiteilige Ausgestaltung des Dichteinsatzes werden zwei Schlitzungen vorgenommen.

Weiterhin wird eine Verwendung eines Dichteinsatzes, wie oben beschrieben, in einem Wellrohrverschraubungssystem, wie oben beschrieben, zur Abdichtung eines Wellrohrs gegen das Wellrohrverschraubungssystem und zur Verhinderung eines Verdrehens des Dichteinsatzes und/oder des Wellrohres in einem Verschraubungskörper vorgeschlagen.

Weiterhin wird eine Verwendung eines Wellrohrverschraubungssystems, wie oben beschrieben, zum Anschluss eines Wellrohres an eine Anschlussgeometrie vorgeschlagen. Das Wellrohr kann dabei auch durch das Innere des Wellrohrverschraubungssystems weitergeführt werden, so dass es auf beiden Seiten desselben übersteht. Das Wellrohr wird vorteilhafterweise derart in den Dichteinsatz eingebracht, dass es das Wellrohrverschraubungssystem auf Seiten der Druckschraube und auf Seiten des Verschraubungskörpers im montierten Zustand überragt. Der montierte Zustand ist definiert durch das Wellrohr, das von dem Wellrohrverschraubungssystem umgriffen und abgedichtet aufgenommen ist durch Anziehen der Druckschraube desselben.

Weiterhin wird ein Verfahren zur Montage eines Wellrohres mit einer Mehrzahl von Wellentälern an eine Anschlussgeometrie vorgeschlagen mit den Schritten:
- Auffädeln einer Druckschraube auf das Wellrohr;
- Einbringen des Wellrohrs in die Ausnehmung eines erfindungsgemäßen Dichteinsatzes derart, dass zumindest eine, bevorzugt eine Mehrzahl, insbesondere mindestens zwei, Rippen im Eingriff mit einem Wellental, bei Vorsehung von zumindest zwei Rippen zwei Wellentälern, allgemein bei einer vorgegebenen Anzahl von Rippen diese im Eingriff mit einer dieser Anzahl von Rippen entsprechenden Anzahl von Wellentälern, des Wellrohrs stehen;
- Einbringen eines Verschraubungskörpers in die Anschlussgeometrie;
- Einbringen des Dichteinsatzes mit dem Wellrohr in den Verschraubungskörper, wobei die Verdrehsicherung des Dichteinsatzes mit einer Verdrehsicherung des Verschraubungskörpers in Eingriff gebracht wird und der Dichteinsatz mit dem ersten Außenwandungsabschnitt aus dem Verschraubungskörper ragt; und
- Aufschrauben der Druckschraube auf den Verschraubungskörper derart, dass mittels der Druckschraube eine Materialverschiebung eines Material des Dichteinsatzes erzeugt wird, wobei das Material sich zumindest teilweise dichtend an das Wellrohr anlegt.

Die Anschlussgeometrie ist ein Bauteil, an das das Wellrohr mittels des Wellrohrverschraubungssystems anschließbar ist. Insbesondere ist durch die Anschlussgeometrie mindestens ein Langformteil, beispielsweise zumindest ein Kabel, führbar, das durch das Wellrohr verläuft. Die Anschlussgeometrie ist nicht Teil des erfindungsgemäßen Wellrohrverschraubungssystems. Beispielsweise ist die Anschlussgeometrie eine Wandung, ein Gehäuse, ein Maschinenteil, ein Stecker zur Herstellung einer elektrischen Verbindung oder eine Kabelführung. Das Wellrohrverschraubungssystem wird vorteilhafterweise an die dem Wellrohrverschraubungssystem nicht zuzurechnende Anschlussgeometrie angebracht. Vorzugsweise weist die Anschlussgeometrie eine Durchgangsausnehmung auf, durch die das mindestens eine Langformteil führbar ist. Weiter bevorzugt wird das Wellrohrverschraubungssystem derart an die Anschlussgeometrie angebracht, dass die Längsachse des Anschlussteils im Wesentlichen senkrecht zu einer Oberfläche der Anschlussgeometrie ist und/oder die Durchgangsausnehmung durchgreift. Die Durchgangsausnehmung weist in einer Ausführungsform ein Gewinde auf, in das vorteilhafterweise der Verschraubungskörper mit seinem Außengewinde schraubbar ist. In einer weiteren Ausführungsform weist die Durchgangsausnehmung kein Gewinde auf und ist insbesondere als Bohrung ausgestaltet. Der Verschraubungskörper kann durch die Durchgangsausnehmung gesteckt und beispielsweise, so dort ein Außengewinde aufweisend, mittels einer Mutter auf der gegenüberliegenden Seite der Anschlussgeometrie verschraubt werden. Aber auch andere Befestigungsarten sind möglich, je nach Ausbildung des Verschraubungskörpers. Das Wellrohr kann vorteilhafterweise derart in den Dichteinsatz eingebracht werden, dass es das Wellrohrverschraubungssystem auf Seiten der Druckschraube und auf Seiten des Verschraubungskörpers im montierten Zustand überragt.

Bevorzugt wird der Dichteinsatz derart in den Verschraubungskörper eingebracht, dass der erste Außenwandungsabschnitt auf dem Verschraubungskörper aufsitzt. In einer Ausgestaltung ist vorgesehen, dass durch Aufschrauben der Druckschraube auf den Verschraubungskörper der im Verschraubungskörper angeordnete und über diesen hinausragende Dichteinsatz durch eine Druckkontur der Druckschraube auf dessen Innenseite der Art derart verformt wird, dass das Material des Dichteinsatzes insbesondere radial nach innen verschoben wird, wobei auch eine Verschiebung des Materials in andere Richtungen erfolgen kann. Hierdurch und insbesondere durch die zusätzliche Abdichtung durch die Rippen des Dichteinsatzes, die sich in die Wellentäler des Wellrohres einfügen wird eine besonders hohe Dichtigkeit erzeugt.

Erfindungsgemäß ist vorgesehen, dass eine Verdrehsicherung des Dichteinsatzes mit einer Verdrehsicherung des Verschraubungskörpers in Eingriff gebracht wird, insbesondere um ein Verdrehen des Dichteinsatzes im Verschraubungskörper sicher zu verhindern. Weiter bevorzugt wird ein Rastelement des zweiten Außenwandungsabschnittes des Dichteinsatzes, bevorzugt eine Mehrzahl von Rastelementen des zweiten Außenwandungsabschnittes des Dichteinsatzes, mit einem Rastelement des Verschraubungskörpers, bevorzugt mit einer Mehrzahl von Rastelementen des Verschraubungskörpers, in Eingriff eingebracht. Weiter bevorzugt wird ein Rastelement der Verdrehsicherung des Dichteinsatzes, bevorzugt eine Mehrzahl von Rastelementen der Verdrehsicherung des Dichteinsatzes, mit einem Rastelement des Verschraubungskörpers, bevorzugt mit einer Mehrzahl von Rastelementen des Verschraubungskörpers, in Eingriff eingebracht.

In einer weiteren Ausgestaltung ist vorgesehen, dass die Druckschraube bis auf eine Anschlagsfläche des Verschraubungskörpers aufgeschraubt wird.

Diese Verschraubung auf Block, das heißt die Verschraubung der Druckschraube auf die Anschlagsfläche des Verschraubungskörpers, kann insbesondere dadurch erzielt werden, dass die die Ausnehmung begrenzende Innenwandung des Dichteinsatzes insbesondere in dem ersten Innenwandungsabschnitt oder dem zweiten Innenwandungsabschnitt, der der Druckschraube zugewandt ist, konisch ausgeführt ist. Der Vorteil der Verschraubung auf Block ist, dass dadurch, dass eine gleichmäßige Kraft auf das Wellrohr ausgeübt wird und insbesondere ein zu hoher, insbesondere punktueller, Druck durch die Verschraubung beziehungsweise durch den Dichteinsatz auf das Wellrohr vermieden werden kann, der das Wellrohr schädigen könnte. Derart wird eine gute Dichtwirkung erzielt.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zur weiteren Ausgestaltung kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im folgendem die gleichen Bezugszeichen auf. Es zeigen:
- FIG. 1: einen erfindungsgemäßen Dichteinsatz;
- FIG. 2: den Dichteinsatz aus FIG. 1 in einer Ansicht auf eine zweite Endstirnfläche;
- FIG. 3: eine Schnittansicht III-III aus FIG. 2;
- FIG. 4: eine alternative Ausgestaltung eines erfindungsgemäßen Dichteinsatzes;
- FIG. 5: eine Aufsicht auf die zweite Endstirnfläche des Dichteinsatzes aus FIG. 4;
- FIG. 6: eine Schnittansicht VI-VI aus FIG. 5;
- FIG. 7: ein erfindungsgemäßes Wellrohrverschraubungssystem in einer Explosionsansicht;
- FIG. 8: eine Ansicht auf eine Druckschraube des montierten Wellrohrverschraubungssystem aus FIG. 7;
- FIG. 9: eine Schnittansicht IX-IX aus FIG. 8; und
- FIG. 10: eine weitere erfindungsgemäße Ausführungsform eines Wellrohrverschraubungssystems.

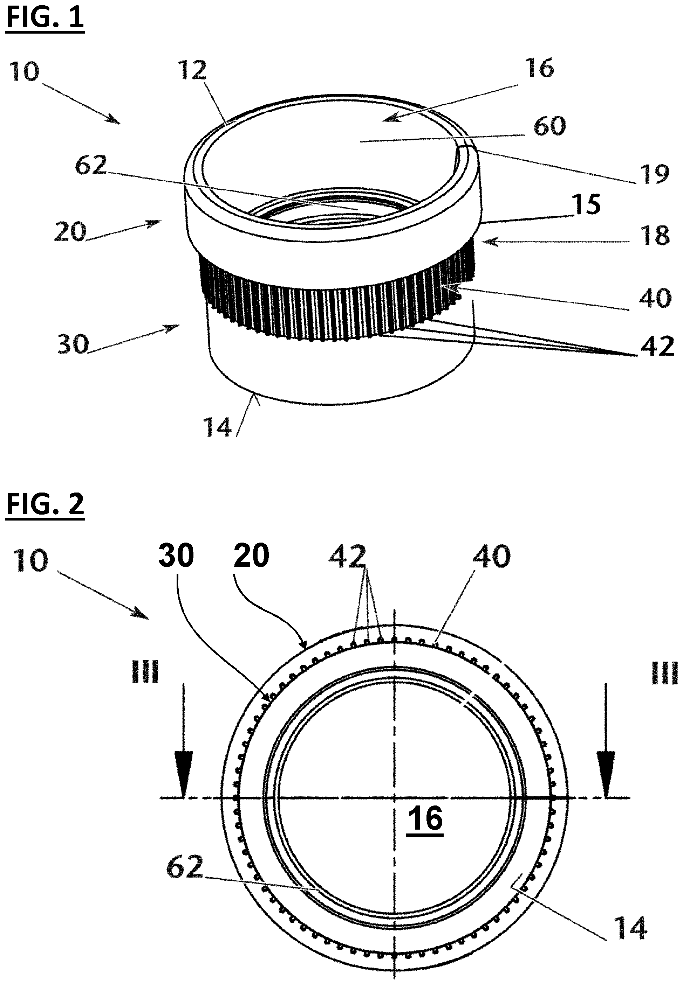

FIG. 1 zeigt einen Dichteinsatz 10 mit einer ersten Endstirnfläche 12 und einer zweiten Endstirnfläche 14. Der Dichteinsatz 10 ist in Wesentlichen zylindrisch geformt und weist eine vollständig durchgehende Ausnehmung 16 auf. Ein Außenmantel 18 des Dichteinsatzes 10 umfasst einen ersten Außenwandungsabschnitt 20 und einen zweiten Außenwandungsabschnitt 30, wobei der erste Außenwandungsabschnitt 20 an die erste Endstirnfläche 12 grenzt und der zweite Außenwandungsabschnitt 30 an die zweite Endstirnfläche 14 grenzt. Ein Außendurchmesser des ersten Außenwandungsabschnitts 20 ist größer als derjenige des zweiten Außenwandungsabschnitts 30, wobei diese durch eine Stufe 15 diskret aneinander angrenzen.

Der zweite Außenwandungsabschnitt 30 umfasst eine Verdrehsicherung 40, die ausgestaltet ist als eine Vielzahl von auf dem Umfang des zweiten Außenwandungsabschnittes 30 verteilter achsparalleler Rastelemente 42, die der Übersicht halber nicht alle mit Bezugszeichen versehen sind. Die Verdrehsicherung 40 grenzt an den ersten Außenwandungsabschnitt 20 und ragt in dieser Ausführungsform in Ihrer Längserstreckung bis etwa zur Mitte des zweiten Außenwandungsabschnitts 30.

Der Dichteinsatz 10 umfasst eine Schlitzung 19, die sich vollständig durchgehend von der ersten Endstirnfläche 12 zur zweiten Endstirnfläche 14 erstreckt. Mittels der Schlitzung kann der Dichteinsatz 10 aufgebogen und auf ein hier nicht dargestelltes Wellrohr aufgebraucht werden.

FIG. 1 ist weiterhin zu entnehmen, dass der Dichteinsatz 10 auf einer Innenwandung 60 der Ausnehmung 16 zumindest eine umlaufende Rippe 62 aufweist.

FIG. 2 zeigt eine Aufsicht auf die zweite Endstirnfläche 14 des Dichteinsatzes 10 der FIG. 1. Die Verdrehsicherung weist eine Mehrzahl von achsparallelen Rastelementen 42 auf, die insbesondere gleichmäßig auf einem Außenumfang des zweiten Außenwandungsabschnittes 30 angeordnet sind. Ebenfalls kann dieser Ansicht eine Rippe 62 entnommen werden, die in der vollständig durch den Dichteinsatz 10 gehenden Ausnehmung 16 angeordnet ist.

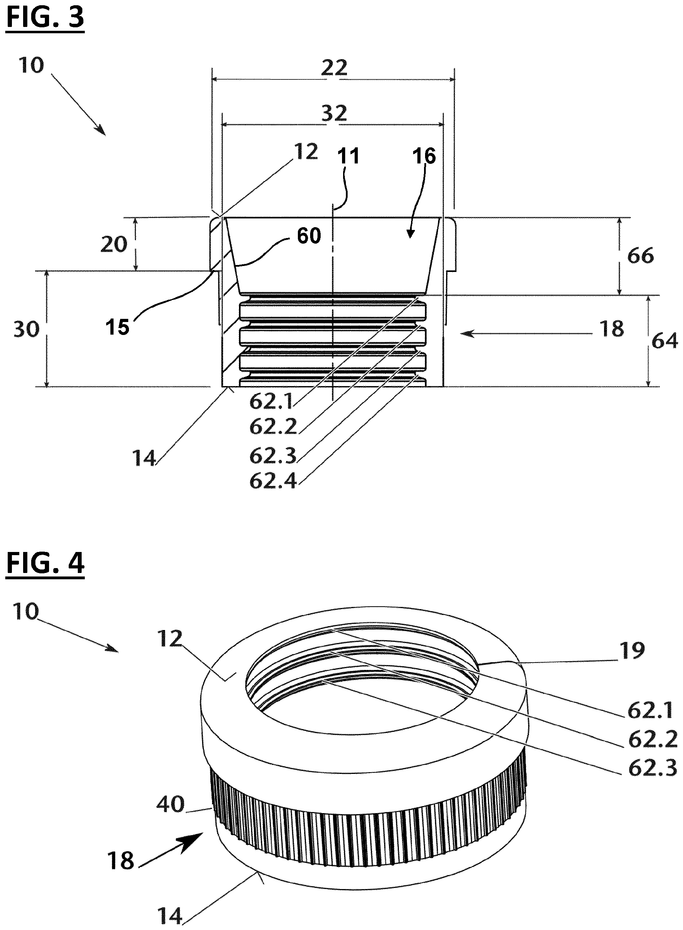

FIG. 3 zeigt eine Schnittansicht III-III der FIG. 2. Die vollständig durchgehende Ausnehmung 16, die sich in Richtung einer Längsachse 11 erstreckt, umfasst die Innenwandung 60, die einen ersten Innenwandungsabschnitt 64 und einen zweiten Innenwandungsabschnitt 66 ausbildet. Der zweite Innenwandungsabschnitt 66 weist eine konische Ausgestaltung auf. Er grenzt an die erste Endstirnfläche 12 und ist dem ersten Außenwandungsabschnitt 20 zugeordnet. Insbesondere verjüngt sich die Innenwandung 60 im zweiten Innenwandungsabschnitt 66 zum ersten Innenwandungsabschnitt 64 hin beziehungsweise weitet sich die Innenwandung 60 zur ersten Endstirnfläche 12 auf. Ein Innenquerschnitt der Innenwandung 60 im zweiten Innenwandungsabschnitt 66 vergrößert sich damit auf die erste Endstirnfläche 12 des Dichteinsatzes 10 hin. Der zweite Innenwandungsabschnitt weist eine Materialdicke auf, die zur ersten Endstirnfläche 12 hin abnimmt. Die Ausnehmung 16 ist im zweiten Innenwandungsabschnitt 66 konisch ausgeführt.

Der erste Innenwandungsabschnitt 64 umfasst vier in Umfangsrichtung umlaufende Rippen 62.1 bis 62.4, wobei die Rippe 62.1 der in FIG. 1 einzig deutliche erkennbaren Rippe 62 entspricht. Der erste Innenwandungsabschnitt 64 grenzt an die zweite Endstirnfläche 14. Er ist dem zweiten Außenwandungsabschnitt 30 zugeordnet.

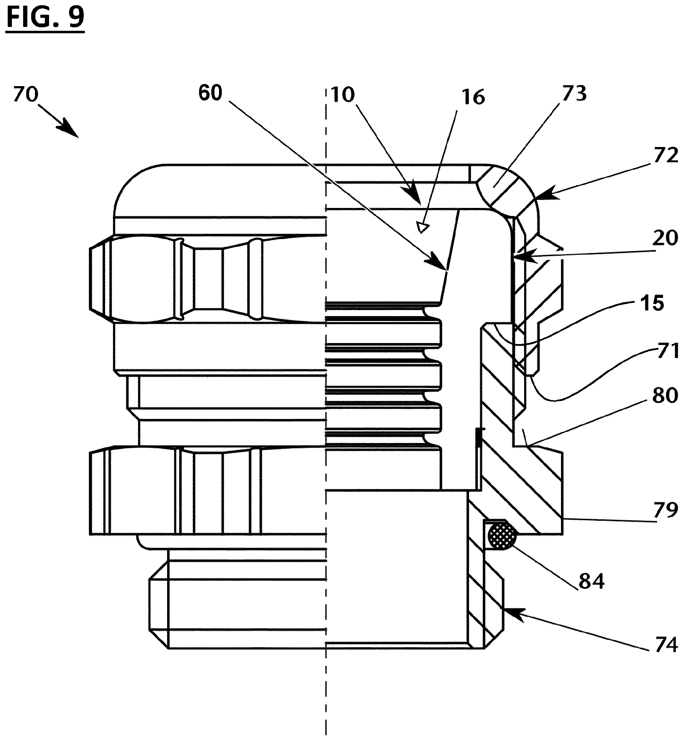

Der Außenmantel 18 des Dichteinsatzes 10 umfasst den ersten Außenwandungsabschnitt 20 und den zweiten Außenwandungsabschnitt 30. Der erste Außenwandungsabschnitt 20 weist einen ersten Außendurchmesser 22 auf, der größer ist als ein zweiter Außendurchmesser 32 des zweiten Außenwandungsabschnitts 30. Hierdurch wird eine Stufe 15 gebildet, die, wie beispielsweise in der FIG. 9 zu sehen ist, ein zu weites Durchschieben in einen in FIG. 9 dargestellten, als Doppelnippel ausgebildeten Verschraubungskörper 74 verhindert.

Die Längen der Außenwandungsabschnitte 20, 30 und der Innenwandungsabschnitte 64, 66 in Richtung der Längsachse 11 sind beispielhaft derart gewählt, dass der erste Außenwandungsabschnitt 20 kürzer als der zweite Innenwandungsabschnitt 66 ist, der zweite Innenwandungsabschnitt 66 kürzer als der erste Innenwandungsabschnitt 64 ist, und der erste Innenwandungsabschnitt 64 kürzer als der zweite Außenwandungsabschnitt 30 ist. Diese Längen können nach Bedarf aber auch unabhängig voneinander anders gewählt werden.

FIG. 4 zeigt eine alternative Ausgestaltung eines Dichteinsatzes 10. Der Dichteinsatz 10 weist eine Schlitzung 19 auf, die es erlaubt, den Dichteinsatz 10 auseinander zu biegen, um diesen an einem nicht gezeigten Wellrohr zu befestigen. Der Dichteinsatz 10 weist eine erste Endstirnfläche 12 und eine zweite Endstirnfläche 14 auf. Weiterhin weist der Dichteinsatz 10 innen umlaufende Rippen 62.1, 62.2 und 62.3 auf. Die umlaufende Rippe 62.1 schließt bündig mit der ersten Endstirnfläche 12 ab. Insbesondere bildet eine Flanke der Rippe 62.1 zumindest teilweise die erste Endstirnfläche 12. Auf dem Außenmantel 18 ist eine Verdrehsicherung 40 angeordnet.

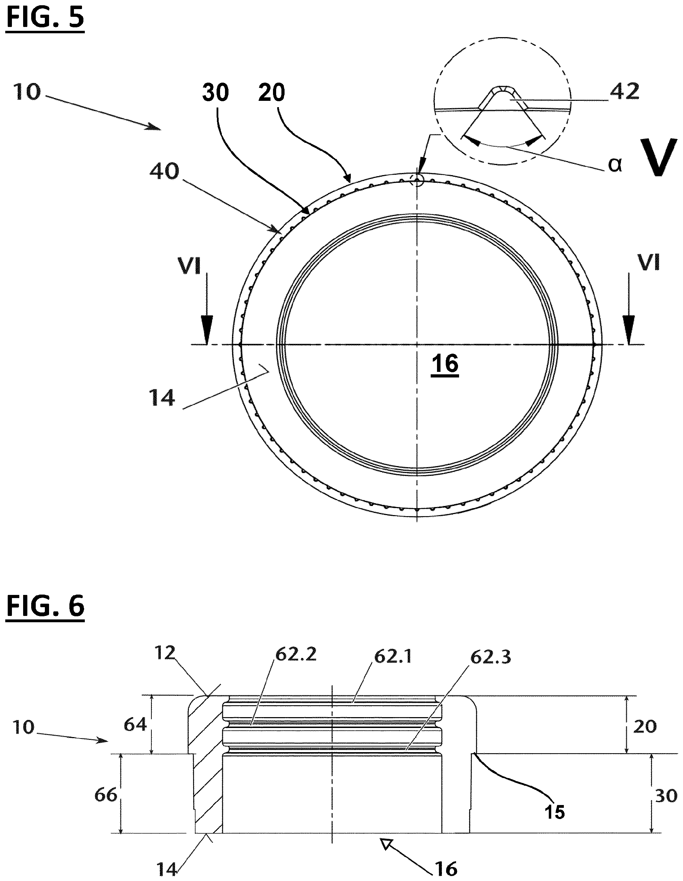

FIG. 5 zeigt eine Ansicht des Dichteinsatzes 10 aus FIG. 4 auf die zweite Endstirnfläche 14. In Detailansicht V ist zu erkennen, dass die Verdrehsicherung 40 achsparallele Rastelemente 42 aufweist, die einen Flankenwinkel α von etwa 70° aufweisen.

FIG. 6 zeigt die Schnittansicht VI-VI aus FIG. 5. Der Dichteinsatz 10 umfasst einen ersten Innenwandungsabschnitt 64 der Ausnehmung 16 und einen zweiten Innenwandungsabschnitt 66 der Innenwandung der Ausnehmung 16. Der erste Innenwandungsabschnitt 64, der die innen umlaufenden Rippen 62.1 bis 62.4 aufweist, grenzt an die erste Endstirnfläche 12, wobei die innen umlaufende Rippe 62.1 bündig mit der ersten Endstirnfläche 12 abschließt. Der erste Innenwandungsabschnitt 64 der Ausnehmung 16 ist einem ersten Außenwandungsabschnitt 20 zugeordnet, der an die erste Endstirnfläche 12 grenzt. Der zweite Innenwandungsabschnitt 66 der Ausnehmung 16 ist einem zweiten Außenwandungsabschnitt 30 zugeordnet, der an die zweite Endstirnfläche 14 grenzt. Zwischen dem ersten Außenwandungsabschnitt 64, der einen größeren Außendurchmesser aufweist als der zweite Außenwandungsabschnitt 66, ist eine Stufe 15 ausgebildet, wie auch bei der Ausführungsform nach den FIG. 1 bis 3.

Die Längen der Außenwandungsabschnitte 20, 30 und der Innenwandungsabschnitte 64, 66 in Richtung der Längsachse 11 sind beispielhaft derart gewählt, dass der erste Außenwandungsabschnitt 20 so lang wie der erste Innenwandungsabschnitt 64 und kürzer als der zweite Innenwandungsabschnitt 66 ist, und der zweite Innenwandungsabschnitt 66 so lang wie der zweite Außenwandungsabschnitt 30 ist. Diese Längen können nach Bedarf aber auch unabhängig voneinander anders gewählt werden.

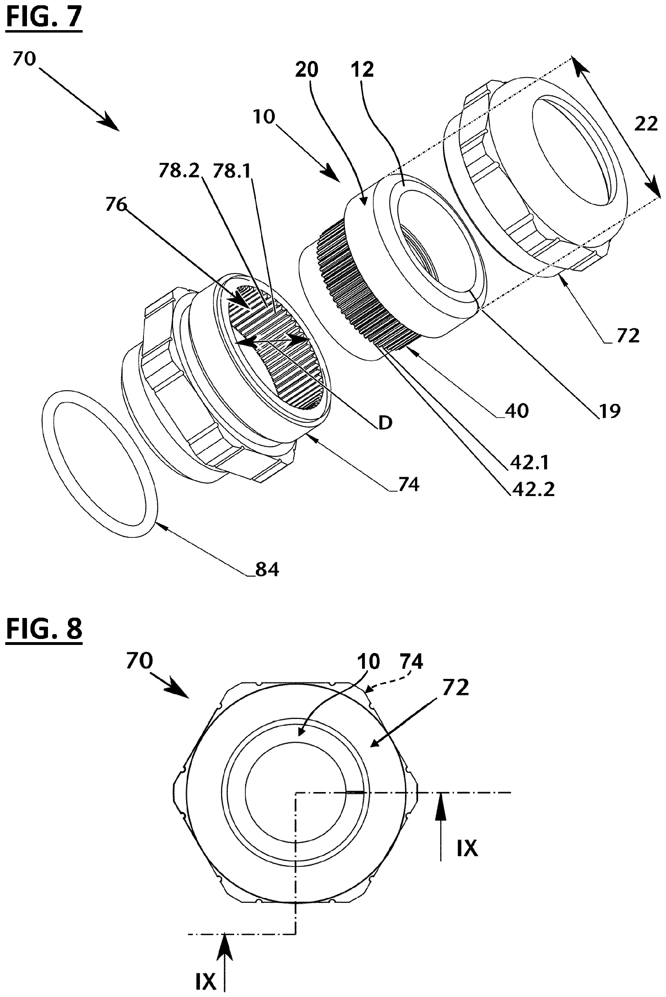

FIG. 7 zeigt ein Wellrohrverschraubungssystem 70 mit einer Druckschraube 72 und einem Verschraubungskörper 74, auf den die Druckschraube 72 schraubbar ist. In den Verschraubungskörper 74 wird ein Dichteinsatz 10, ausgebildet ähnlich wie der Dichteinsatz 10 gemäß den FIG. 1 bis 3, mit einer Schlitzung 19 gesetzt. Ein O-Ring 84, der auf dem als Doppelnippel ausgebildeten Verschraubungskörper 74 angeordnet ist, dichtet diesen gegen eine nicht gezeigte Anschlussgeometrie ab. Der Verschraubungskörper 74 weist innen liegend eine Verdrehsicherung 76 auf, die mit einer Verdrehsicherung 40 des Dichteinsatzes 10 korrespondiert. Die einzelnen achsparallelen Rastelemente, die beispielhaft mit 42.1 und 42.2 bezeichnet sind, der Verdrehsicherung 40 des Dichteinsatzes 10 greifen in die Lücken zwischen den achsparallelen Rastelementen, die beispielhaft mit 78.1 und 78.2 bezeichnet sind, der Verdrehsicherung 76 des Verschraubungskörpers 74 ein.

Ein Innendurchmesser D des Verschraubungskörpers 74 ist insbesondere kleiner als ein erster Außendurchmesser 22 des Dichteinsatzes 10. Der Dichteinsatz 10 ist somit nur teilweise in den Verschraubungskörper 74 einführbar, so dass ein erster Außenwandungsabschnitt 20 und eine erste Endstirnfläche 12 des Dichteinsatzes 10 über den Verschraubungskörper 74 hinausragt. Wenn die Druckschraube 72 auf den Verschraubungskörper 74 aufgeschraubt wird, drückt diese auf den Dichteinsatz 10 und erzeugt dort eine Materialverschiebung insbesondere im Bereich des ersten Außenwandungsabschnitts 20 zur Dichtung gegen das durch den Dichteinsatz 10 führbare Wellrohr.

FIG. 8 zeigt das Wellrohrverschraubungssystem 70 aus FIG. 7 in einer Draufsicht auf die Druckschraube 72.

FIG. 9 zeigt die Schnittansicht IX-IX aus FIG. 8. Die Druckschraube 72 weist eine innenliegende, umlaufende Druckkontur 73 auf, die auf den ersten Außenwandungsabschnitt 20 und die erste Endstirnfläche 12 des Dichteinsatzes 10 drückt, wenn die Druckschraube 72 auf den Verschraubungskörper 74 aufgeschraubt wird. Die Druckschraube 72 weist unabhängig von dem hier nicht dargestellten Wellrohr, insbesondere innerhalb bestimmter Maßtoleranzen eines Durchmessers des Wellrohres, eine umlaufenden Stirnfläche 71 auf, so dass die Druckschraube 72 bis zu einem in Kontakt bringen der Stirnfläche 71 der Druckschraube 72 mit einer Anschlagsfläche 80 des Verschraubungskörpers 74 aufschraubbar ist. Die Anschlagsfläche 80 ist in dieser Ausführungsform von einer an dem Verschraubungskörper 74 ausgebildeten Schlüsselanlagestruktur 79 gebildet. Eine solche Verschraubung nennt sich eine Verschraubung auf Block und hat den Vorteil, dass sich ein versehentliches Lösen beispielsweise durch Temperaturschwankungen oder Vibrationen nicht so schnell ergibt, da hierbei die nicht weiter bezeichneten Gewindegeometrien der Druckschraube 72 und des Verschraubungskörpers 74 sich miteinander verspannen. Durch die konische Ausgestaltung einer Innenwandung 60 in einem oberen Innenwandungsabschnitt , entsprechend dem zweiten Innenwandungsabschnitt 66 der Ausführungsform nach den FIG. 1 bis 3, der Ausnehmung 16 des Dichtkörpers 10 kann das Material des Dichtkörpers 10 bis an das hier nicht dargestellte Wellrohr heranverschoben werden, ohne dass das Wellrohr dadurch einen Schaden nimmt beziehungsweise sich ein gleichmäßiger Anpressdruck des Dichtelementes auf das Wellrohr ergibt. Der Dichteinsatz 10 wird unter dem Druck der Druckschraube 72 verformt und kann in Hinblick auf sein Material und seine Abmessungen vorteilhafterweise so gebildet sein, dass eine Verschraubung auf Block ermöglicht ist. Der O-Ring 84 ist in einer nicht weiter bezeichneten Ringnut unterhalb der Schlüsselanlagestruktur 79 des Verschraubungskörpers 74 angeordnet.

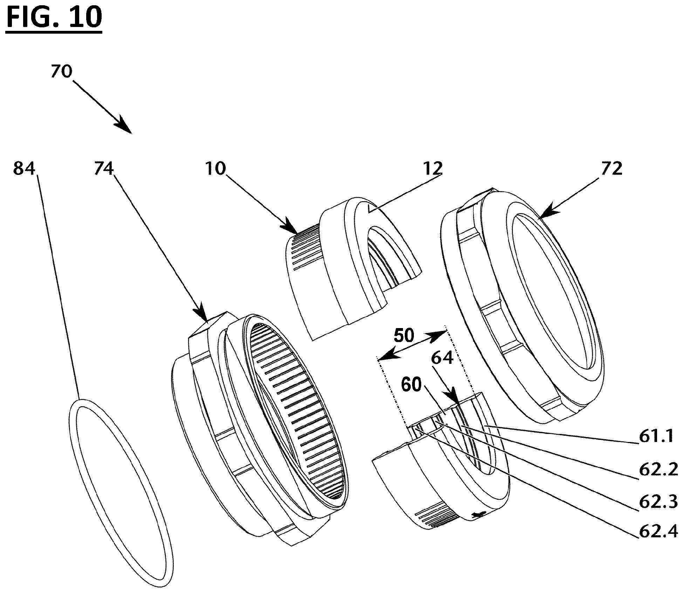

FIG. 10 zeigt eine weitere, alternative Ausgestaltung des Wellrohrverschraubungssystems 70. Dieses umfasst eine Druckschraube 72, die auf einen als Doppelnippel ausgebildeten Verschraubungskörper 74 aufschraubbar ist, sowie einen Dichteinsatz 10, der zweiteilig, ansonsten aber ähnlich wie der Dichteinsatz 10 gemäß den FIG. 4 bis 6 ausgestaltet ist. Für die zweiteilige Ausgestaltung des Dichteinsatzes 10 werden zwei Schlitzungen vorgenommen, die hier nicht weiter bezeichnet sind. Weiterhin weist das Wellrohrverschraubungssystem 70 einen O-Ring 84 auf, der auf den Verschraubungskörper 74 aufgebracht wird.

Der Dichteinsatz 10 weist vier innen umlaufende Rippen 61.1 bis 61.4 auf, die im Wesentlichen gleichmäßig über die vollständige Länge 50 einer Innenwandung 60 verteilt sind, was ein wesentlicher Unterschied des Dichteinsatzes 10 dieser Ausführungsform zu demjenigen der FIG. 4 bis 6 ist. Der Dichteinsatz 10 weist somit ausschließlich einen ersten Innenwandungsabschnitt 64 auf. Der gezeigten Ausgestaltung ist ebenfalls zu entnehmen, dass die umlaufende Rippe 61.1 bündig mit einer ersten Endstirnfläche 12 des Dichteinsatzes 10 abschließt.

Das vorgeschlagene Wellrohrverschraubungssystem 70 sowie der darin eingesetzte Dichteinsatz 10 unterscheiden sich von den bisher aus dem Stand der Technik bekannten Fittings für Wellrohre grundlegend. Insbesondere kann mittels des Wellrohrverschraubungssystems eine sehr hohe Dichtigkeit bei gleichzeitig sehr kleinem Bauraum erreicht werden. Das Wellrohrverschraubungssystem erlaubt es zudem, einen direkten Anschluss an eine Anschlussgeometrie, beispielsweise eine Gehäusewandung oder ein Steckersystem, ohne weitere Bauteile vorzusehen, wie es beispielsweise bei Fittings notwendig wäre. Ein Wellrohr kann zudem im Inneren der Wellrohrverschraubungssystems weitergeführt werden, so dass es auf beiden Seiten desselben übersteht. Dies vereinfacht die Montage erheblich, insbesondere muss vor Montage eines Wellrohrs mit dem erfindungsgemäßen Wellrohrverschraubungssystem keine Abmaßung beziehungsweise exakte Ablängung des Wellrohres erfolgen, da dies nachfolgend der Montage des Wellrohrverschraubungssystems geschehen kann, so notwendig. Auch ist die Dichtungswirkung im Vergleich zu bekannten Wellrohrbefestigungssystemen, bei denen ein Wellrohrende in einem Systembauteil aufgenommen ist und damit das Wellrohr in dem bekannten System endet, verbessert, da das Ende des Wellrohres mit seiner oft auch unsauberen Schneidkante als auch die Lage im Systembauteil keinen Einfluss auf die Dichtungswirkung bei dem erfindungsgemäßen Wellrohrverschraubungssystem ausübt.

### Bezugszeichenliste

- 10: Dichteinsatz
- 11: Längsachse
- 12: erste Endstirnfläche
- 14: zweite Endstirnfläche
- 15: Stufe
- 16: vollständig durchgehende Ausnehmung
- 18: Außenmantel
- 19: Schlitzung
- 20: erster Außenwandungsabschnitt
- 22: erster Außendurchmesser
- 30: zweiter Außenwandungsabschnitt
- 32: zweiter Außendurchmesser
- 40: Verdrehsicherung
- 42: achsparallele Rastelemente
- 50: Länge des Dichteinsatzes
- 60: Innenwandung der Ausnehmung
- 62: innen umlaufende Rippen
- 64: ersten Innenwandungsabschnitt der Ausnehmung
- 66: zweiter Innenwandungsabschnitt der Ausnehmung
- 70: Wellrohrverschraubungssystem
- 71: umlaufende Stirnfläche der Druckschraube
- 72: Druckschraube
- 73: Druckkontur
- 74: Verschraubungskörper
- 76: Verdrehsicherung
- 78: achsparallele Rastelemente
- 79: Schlüsselanlagestruktur
- 80: Anschlagsfläche
- 84: O-Ring
- α: Flankenwinkel der Rastelemente
- D: Innendurchmesser

## Patentansprüche

1. Dichteinsatz (10) für ein Wellrohrverschraubungssystem (70), umfassend
- eine Ausnehmung (16) zur Aufnahme eines Wellrohres,
- eine erste und eine zweite Endstirnfläche (12, 14);
- einen ersten Außenwandungsabschnitt (20) mit einem ersten Außendurchmesser (22) und
- einen zweiten Außenwandungsabschnitt (30) mit einem zweiten Außendurchmesser (32);
wobei
- eine die Ausnehmung (16) begrenzende Innenwandung (60) zumindest eine teilweise umlaufende Rippe (62) umfasst;
- der erste Außenwandungsabschnitt (20) an die erste Endstirnfläche (12) grenzt und sich entlang einer Längsachse (11) des Dichteinsatzes (10) bis zu dem zweiten Außenwandungsabschnitt (30) erstreckt;
- der zweite Außenwandungsabschnitt (30) an die zweite Endstirnfläche (14) grenzt und sich entlang der Längsachse (11) bis zu dem ersten Außenwandungsabschnitt (20) erstreckt;
- der erste Außendurchmesser (22) größer ist als der zweite Außendurchmesser (32);
- der erste und der zweite Außenwandungsabschnitt (20, 30) jeweils zylindrisch ausgestaltet sind:
- auf einem Außenmantel (18) des Dichteinsatzes (10) eine Verdrehsicherung (40) angeordnet ist; und
- die Verdrehsicherung (40) dem zweiten Außenwandungsabschnitt (30) zugeordnet ist,
- die Verdrehsicherung (40) eine Mehrzahl von als Riefen und/oder Rippen ausgebildete, parallel zur Längsrichtung des Dichteinsatzes angeordnete Rastelemente (42) aufweist.

2. Dichteinsatz (10) gemäß Anspruch 1, umfassend mindestens zwei umlaufende Rippen (62).

3. Dichteinsatz (10) gemäß Anspruch 2, wobei die Rippen (62) einen gleichmäßigen Abstand voneinander haben.

4. Dichteinsatz (10) gemäß einem oder mehreren der vorhergehenden Ansprüche, wobei die Rippe (62) in einem Querschnitt trapezoid, rechteckig, dreieckig, bogensegmentförmig oder zumindest teilweise oval ausgeführt ist.

5. Dichteinsatz (10) gemäß einem oder mehreren der vorhergehenden Ansprüche, wobei
- die Innenwandung (60) einen ersten Innenwandungsabschnitt (64) und einen zweiten Innenwandungsabschnitt (66) umfasst,
- der erste Innenwandungsabschnitt (64) die zumindest eine Rippe (62) umfasst,
- der zweite Innenwandungsabschnitt (66) keine Rippe (62) umfasst.

6. Dichteinsatz (10) gemäß Anspruch 5, wobei die erste Endstirnfläche (12) und die zweite Endstirnfläche (14) sich gegenüberliegen, wobei der erste Innenwandungsabschnitt (64) der ersten Endstirnfläche (12) oder der zweiten Endstirnfläche (14) zugeordnet ist.

7. Dichteinsatz (10) gemäß einem oder mehreren der vorhergehenden Ansprüche, wobei zumindest eine Rippe (62) bündig mit der ersten Endstirnfläche (12) oder der zweiten Endstirnfläche (14) abschließt.

8. Dichteinsatz (10) gemäß einem oder mehreren der vorhergehenden Ansprüche, wobei die erste Endstirnfläche (12) und die zweite Endstirnfläche (14) sich gegenüber liegen, wobei der Dichteinsatz (10) zumindest eine von der ersten Endstirnfläche (12) zur zweiten Endstirnfläche (14) durchgehende Schlitzung (19) umfasst.

9. Dichteinsatz (10) gemäß einem oder mehreren der vorhergehenden Ansprüche, wobei eine Materialdicke des Dichteinsatzes (10) zur ersten Endstirnfläche (12) und/oder zur zweiten Endstirnfläche (14) hin geringer wird.

10. Dichteinsatz (10) gemäß Anspruch 9, wobei die Materialdicke des Dichteinsatzes (10) nur im zweiten Innenwandungsabschnitt (66) zu der ersten oder der zweiten Endstirnfläche (12, 14) hin geringer wird.

11. Wellrohrverschraubungssystem (70), zumindest umfassend
- eine Druckschraube (72),
- einen Verschraubungskörper (74) und
- einen Dichteinsatz (10) gemäß einem oder mehreren der vorhergehenden Ansprüche.

12. Wellrohrverschraubungssystem (70) gemäß Anspruch 11, wobei der Verschraubungskörper (74) eine Verdrehsicherung (76) umfasst, die mit der Verdrehsicherung (40) des Dichteinsatzes (10) korrespondiert.

13. Wellrohrverschraubungssystem (70) gemäß einem oder mehreren der Ansprüche 11 bis 12, wobei der Verschraubungskörper (74) eine Anschlagsfläche (80) für die Druckschraube (72) umfasst.

14. Verwendung eines Dichteinsatzes (10) gemäß einem oder mehreren der Ansprüche 1 bis 10 in einem Wellrohrverschraubungssystem (70) gemäß einem oder mehreren der Ansprüche 11 bis 13 zur Abdichtung eines Wellrohrs gegen das Wellrohrverschraubungssystem (70) und zur Verhinderung eines Verdrehens des Dichteinsatzes (10) und/oder des Wellrohres in einem Verschraubungskörper (74).

15. Verwendung eines Wellrohrverschraubungssystems (70) gemäß einem oder mehreren der Ansprüche 11 bis 13 zum Anschluss eines Wellrohres an eine Anschlussgeometrie.

16. Verfahren zur Montage eines Wellrohres mit einer Mehrzahl von Wellentälern an eine Anschlussgeometrie, mit den Schritten:
- Auffädeln einer Druckschraube (72) auf das Wellrohr;
- Einbringen des Wellrohrs in die Ausnehmung (16) eines Dichteinsatzes (10), der gemäß einem oder mehreren der Ansprüche 1 bis 10 ausgebildet ist, derart, dass zumindest eine Rippe (62) in Eingriff mit einem Wellental des Wellrohres steht;
- Einbringen eines Verschraubungskörpers (74) in die Anschlussgeometrie;
- Einbringen des Dichteinsatzes (10) mit dem Wellrohr in den Verschraubungskörper (74), wobei die Verdrehsicherung (40) des Dichteinsatzes (10) mit einer Verdrehsicherung (76) des Verschraubungskörpers (74) in Eingriff gebracht wird und der Dichteinsatz (10) mit dem ersten Außenwandungsabschnitt (20) aus dem Verschraubungskörper (74) ragt; und
- Aufschrauben der Druckschraube (72) auf den Verschraubungskörper (74) derart, dass mittels der Druckschraube (72) eine Materialverschiebung eines Materials des Dichteinsatzes (10) erzeugt wird, wobei das Material sich zumindest teilweise dichtend an das Wellrohr anlegt.

17. Verfahren gemäß Anspruch 16, wobei die Druckschraube (72) bis auf eine Anschlagsfläche (80) des Verschraubungskörpers (74) aufgeschraubt wird.

18. Verfahren gemäß einem oder mehreren der Ansprüche 16 bis 17, wobei das Wellrohr derart in den Dichteinsatz (10) eingebracht wird, dass es das Wellrohrverschraubungssystem auf Seiten der Druckschraube (72) und auf Seiten des Verschraubungskörpers (74) im montierten Zustand überragt.

## Claims

1. Sealing insert (10) for a corrugated-pipe screw fastening system (70), comprising
- a cutout (16) for receiving a corrugated pipe,
- a first and a second end face (12, 14);
- a first external wall portion (20) having a first outer diameter (22); and
- a second external wall portion (30) having a second external diameter (32);
wherein
- an internal wall (60) delimiting the cutout (16) comprises at least one partially circumferentially extending rib (62);
- the first external wall portion (20) is adjacent to the first end face (12) and extends along a longitudinal axis (11) of the sealing insert (10) up to the second external wall portion (30);
- the second external wall portion (30) is adjacent to the second end face (14) and extends along the longitudinal axis (11) up to the first external wall portion (20);
- the first outer diameter (22) is larger than the second outer diameter (32);
- the first and the second external wall portion (20, 30) are each configured to be cylindrical;
- an anti-rotation means (40) is arranged on an outer shell (18) of the sealing insert (10); and
- the anti-rotation means (40) is associated with the second external wall portion (30).
- the anti-rotation means (40) has a plurality of latching elements (42) formed as grooves and/or ribs, arranged parallel to the longitudinal direction of the sealing insert.

2. Sealing insert (10) according to claim 1, comprising at least two circumferential ribs (62).

3. Sealing insert (10) according to claim 2, wherein the ribs (62) are uniformly spaced apart from one another.

4. Sealing insert (10) according to one or more of the preceding claims, wherein the rib (62) is trapezoidal, rectangular, triangular, arc segment-shaped or at least partially oval in cross-section.

5. Sealing insert (10) according to one or more of the preceding claims, wherein
- the internal wall (60) comprises a first internal wall portion (64) and a second internal wall portion (66),
- the first internal wall portion (64) comprises the at least one rib (62),
- the second internal wall portion (66) does not comprise a rib (62).

6. Sealing insert (10) according to claim 5, wherein the first end face (12) and the second end face (14) are located opposite each other, wherein the first internal wall portion (64) is associated with the first end face (12) or the second end face (14).

7. Sealing insert (10) according to one or more of the preceding claims, wherein at least one rib (62) is flush with the first end face (12) or the second end face (14).

8. Sealing insert (10) according to one or more of the preceding claims, wherein the first end face (12) and the second end face (14) are located opposite each other, wherein the sealing insert (10) comprises at least one slit (19) passing through from the first end face (12) to the second end face (14).

9. Sealing insert (10) according to one or more of the preceding claims, wherein a material thickness of the sealing insert (10) decreases towards the first end face (12) and/or towards the second end face (14).

10. Sealing insert (10) according to claim 9, wherein the material thickness of the sealing insert (10) decreases only in the second internal wall portion (66) towards the first or the second end face (12, 14).

11. Corrugated-pipe screw fastening system (70), at least comprising
- a pressing screw (72),
- a screw fastening body (74) and
- a sealing insert (10) according to one or more of the preceding claims.

12. Corrugated-pipe screw fastening system (70) according to claim 11, wherein the screw fastening body (74) comprises an anti-rotation means (76) corresponding to the anti-rotation means (40) of the sealing insert (10).

13. Corrugated-pipe screw fastening system (70) according to one or more of claims 11 to 12, wherein the screw fastening body (74) comprises a stop surface (80) for the pressing screw (72).

14. Use of a sealing insert (10) according to one or more of claims 1 to 10 in a corrugated-pipe screw fastening system (70) according to one or more of claims 11 to 13 for sealing a corrugated pipe against the corrugated-pipe screw fastening system (70) and for preventing the sealing insert (10) and/or the corrugated pipe from rotating in a screw fastening body (74).

15. Use of a corrugated-pipe screw fastening system (70) according to one or more of claims 11 to 13 for connecting a corrugated pipe to a connection geometry.

16. Method for fitting a corrugated pipe having a plurality of corrugation troughs to a connection geometry, with the steps:
- threading a pressing screw (72) onto the corrugated pipe;
- inserting the corrugated pipe into the cutout (16) of a sealing insert (10) formed according to one or more of claims 1 to 10 in such a manner that at least one rib (62) is in engagement with a corrugation trough of the corrugated pipe;
- inserting a screw fastening body (74) into the connection geometry;
- inserting the sealing insert (10) with the corrugated pipe into the screw fastening body (74), wherein the anti-rotation means (40) of the sealing insert (10) is brought in engagement with an anti-rotation means (76) of the screw fastening body (74) and the sealing insert (10) protrudes with the first external wall portion (20) from the screw fastening body (74); and
- screwing the pressing screw (72) onto the screw fastening body (74) in such a manner that a material displacement of a material of the sealing insert (10) is created by means of the pressing screw (72), wherein the material rests at least partially sealingly against the corrugated pipe.

17. Method according to claim 16, wherein the pressing screw (72) is screwed on up to a stop surface (80) of the screw fastening body (74).

18. Method according to one or more of claims 16 to 17, wherein the corrugated pipe is inserted into the sealing insert (10) in such a manner that it protrudes beyond the corrugated-pipe screw fastening system on the side of the pressing screw (72) and on the side of the screw fastening body (74) in the mounted state.

## Revendications

1. Insert d'étanchéité (10) pour un système de vissage de tuyau ondulé (70), comprenant
- un évidement (16) destiné à recevoir un tube ondulé,
- une première et une deuxième surfaces frontales d'extrémité (12, 14) ;
- une première partie de paroi extérieure (20) ayant un premier diamètre extérieur (22), et
- une deuxième partie de paroi extérieure (30) ayant un deuxième diamètre extérieur (32) ;
dans lequel
- une paroi intérieure (60) délimitant l'évidement (16) comprend une nervure (62) au moins partiellement circonférentielle ;
- la première partie de paroi extérieure (20) est adjacente à la première surface frontale d'extrémité (12) et s'étend le long d'un axe longitudinal (11) de l'insert d'étanchéité (10) jusqu'à la deuxième partie de paroi extérieure (30) ;
- la deuxième partie de paroi extérieure (30) est adjacente à la deuxième surface frontale d'extrémité (14) et s'étend le long de l'axe longitudinal (11) jusqu'à la première partie de paroi extérieure (20) ;
- le premier diamètre extérieur (22) est plus grand que le deuxième diamètre extérieur (32) ;
- les première et deuxième parties de paroi extérieure (20, 30) sont chacune de forme cylindrique :
- un dispositif anti-rotation (40) est disposé sur une enveloppe extérieure (18) de l'insert d'étanchéité (10) ; et
- le dispositif anti-rotation (40) est associé à la deuxième partie de paroi extérieure (30),
- le dispositif anti-rotation (40) présente une pluralité d'éléments d'encliquetage (42) réalisés sous forme de rainures et/ou de nervures et disposés parallèlement à la direction longitudinale de l'insert d'étanchéité.

2. Insert d'étanchéité (10) selon la revendication 1, comprenant au moins deux nervures (62) circonférentielles.

3. Insert d'étanchéité (10) selon la revendication 2, dans lequel les nervures (62) sont espacées de manière uniforme.

4. Insert d'étanchéité (10) selon l'une ou plusieurs des revendications précédentes, dans lequel la nervure (62) est réalisée dans une section transversale trapézoïdale, rectangulaire, triangulaire, en forme de segment d'arc ou au moins partiellement ovale.

5. Insert d'étanchéité (10) selon une ou plusieurs des revendications précédentes, dans lequel
- la paroi intérieure (60) comprend une première partie (64) de paroi interne et une deuxième partie (66) de paroi interne,
- la première partie (64) de paroi interne comprend la au moins une nervure (62),
- la deuxième partie (66) de paroi interne ne comprend pas de nervure (62).

6. Insert d'étanchéité (10) selon la revendication 5, dans lequel la première surface frontale d'extrémité (12) et la deuxième surface frontale d'extrémité (14) sont opposées l'une à l'autre, la première partie (64) de paroi interne étant associée à la première surface frontale d'extrémité (12) ou à la deuxième surface frontale d'extrémité (14).

7. Insert d'étanchéité (10) selon une ou plusieurs des revendications précédentes, dans lequel au moins une nervure (62) affleure la première surface frontale d'extrémité (12) ou la deuxième surface frontale d'extrémité (14).

8. Insert d'étanchéité (10) selon l'une ou plusieurs des revendications précédentes, dans lequel la première surface frontale d'extrémité (12) et la deuxième surface frontale d'extrémité (14) sont face à face, l'insert d'étanchéité (10) comprenant au moins une fente (19) traversant de la première surface frontale d'extrémité (12) à la deuxième surface frontale d'extrémité (14).

9. Insert d'étanchéité (10) selon une ou plusieurs des revendications précédentes, dans lequel une épaisseur de matériau de l'insert d'étanchéité (10) diminue vers la première surface frontale d'extrémité (12) et/ou vers la deuxième surface frontale d'extrémité (14).

10. Insert d'étanchéité (10) selon la revendication 9, dans lequel l'épaisseur de matériau de l'insert d'étanchéité (10) diminue uniquement dans la deuxième partie (66) de paroi intérieure vers la première ou la deuxième surface frontale d'extrémité (12, 14).

11. Système de vissage de tuyau ondulé (70), comprenant au moins
- une vis de pression (72),
- un corps de vissage (74) et
- un insert d'étanchéité (10) selon une ou plusieurs des revendications précédentes.

12. Système de vissage de tube ondulé (70) selon la revendication 11, dans lequel le corps de vissage (74) comprend un dispositif anti-rotation (76) correspondant au dispositif anti-rotation (40) de l'insert d'étanchéité (10).

13. Système de vissage de tube ondulé (70) selon une ou plusieurs des revendications 11 à 12, dans lequel le corps de vissage (74) comprend une surface de butée (80) pour la vis de pression (72).

14. Utilisation d'un insert d'étanchéité (10) selon l'une ou plusieurs des revendications 1 à 10 dans un système de vissage de tube ondulé (70) selon l'une ou plusieurs des revendications 11 à 13 pour assurer l'étanchéité d'un tube ondulé contre le système de vissage de tube ondulé (70) et pour empêcher la rotation de l'insert d'étanchéité (10) et/ou du tube ondulé dans un corps de vissage (74).

15. Utilisation d'un système de vissage de tube ondulé (70) selon l'une ou plusieurs des revendications 11 à 13 pour raccorder un tube ondulé à une géométrie de raccordement.

16. Procédé de montage d'un tube ondulé comportant une pluralité de creux d'ondulation sur une géométrie de raccordement, comprenant les étapes consistant à :
- Enfilage d'une vis de pression (72) sur le tube ondulé ;
- Insertion du tube ondulé dans l'évidement (16) d'un insert d'étanchéité (10) réalisé selon une ou plusieurs des revendications 1 à 10, de manière à ce qu'au moins une nervure (62) soit en prise avec un creux d'ondulation du tube ondulé ;
- Insertion d'un corps de vissage (74) dans la géométrie de raccordement ;
- Insertion de l'insert d'étanchéité (10) avec le tube ondulé dans le corps de vissage (74), le dispositif anti-rotation (40) de l'insert d'étanchéité (10) étant mis en prise avec un dispositif anti-rotation (76) du corps de vissage (74) et l'insert d'étanchéité (10) faisant saillie du corps de vissage (74) avec la première section de paroi extérieure (20) ; et
- Vissage de la vis de pression (72) sur le corps de vissage (74) de telle sorte qu'un déplacement de matériau d'un matériau de l'insert d'étanchéité (10) soit produit au moyen de la vis de pression (72), le matériau s'appliquant de manière au moins partiellement étanche contre le tube ondulé.

17. Procédé selon la revendication 16, dans lequel la vis de pression (72) est vissée jusqu'à une surface de butée (80) du corps de vissage (74).

18. Procédé selon l'une ou plusieurs des revendications 16 à 17, dans lequel le tube ondulé est introduit dans l'insert d'étanchéité (10) de telle sorte qu'il fait saillie du système de vissage du tube ondulé du côté de la vis de pression (72) et du côté du corps de vissage (74) à l'état monté.
